# FASCICULE DE BREVET EUROPEEN

(11) **EP 3 984 782 B1**
(45) Date de publication et mention de la délivrance du brevet: **28.05.2025**
(21) Numéro de dépôt: 21202988.8
(22) Date de dépôt: 15.10.2021
(51) Int. Cl.: B60C 15/02, B60C 7/24, B60C 23/00, B60B 25/12, B60C 15/028, B60C 19/00, B60B 3/08, B60B 25/00, B60C 23/06

(54) **KIT POUR FORMER UN OUTIL AGRICOLE A PARTIR D'UN CORPS DE ROUE OU UN SUPPORT TUBULAIRE**
BAUSATZ ZUM ERSTELLEN EINES LANDWIRTSCHAFTLICHEN GERÄTS AUS EINEM RADKÖRPER ODER EINEM ROHRFÖRMIGEN TRÄGER
KIT FOR FORMING AN AGRICULTURAL TOOL FROM A WHEEL BODY OR A TUBULAR SUPPORT

(30) Priorité: 16.10.2020 FR 2010675
(43) Date de publication de la demande: 20.04.2022
(73) Titulaire: OTICO, 77650 Chalmaison (FR)
(72) Inventeur: PHELY, Olivier, 77650 Chalmaison (FR)
(74) Mandataire: Cabinet Netter

(56) Documents cités:
- EP-A2- 0 159 274
- CA-A1- 2 727 643
- FR-A1- 3 028 136
- FR-A2- 2 579 527
- GB-A- 1 351 611
- GB-A- 2 059 298
- GB-A- 267 517
- US-A1- 2007 227 639
- US-A1- 2021 107 314
- US-B2- 10 017 010

## Description

L'invention a trait à un kit destiné à former un outil agricole à partir d'un corps de roue ou un support tubulaire, le kit comprenant un bandage souple présentant une chambre creuse et une paroi interne qui délimite cette chambre creuse, le bandage souple présentant en outre une ouverture circulaire sur la chambre creuse et une paire de talons qui borde cette ouverture circulaire et par l'intermédiaire de laquelle le bandage souple se monte autour du corps de roue ou du support tubulaire.

On connaît des outils agricoles en forme de roue, cette roue comprenant un corps de révolution et un bandage souple et creux monté en périphérie du corps de roue. Une roue formant outil de ce type s'utilise notamment dans certaines machines de travail des champs. Ces machines sont généralement tractées et de type porté ou semi-porté.

Dans les machines agricoles de ce type, un outil de travail du sol, tel qu'un soc, un disque ou une dent, vient créer un sillon destiné à recevoir des graines ou des semences. Le sillon est ensuite refermé pour permettre la germination de ces graines ou semences.

Une roue-outil peut être utilisée en combinaison d'un élément de semoir afin d'en régler la profondeur de travail. On parle alors de roue de jauge. Une roue-outil peut aussi être utilisée pour rappuyer le sol après le passage de cet élément, comme c'est le cas des roues dites de "rappui".

Le corps de la roue est réalisé de façon assez rigide, ce qui permet de transmettre les efforts nécessaires au travail de la terre. Le bandage souple est réalisé de manière telle que son enveloppe se déforme pendant le travail, ce qui favorise le décollement de la terre et évite l'encrassement du bandage. Le plus souvent, le bandage est fabriqué en élastomère et s'utilise non gonflé, c'est-à-dire que l'intérieur de son enveloppe se trouve en communication fluidique avec l'extérieur de celle-ci.

Historiquement, on distingue au moins deux types de bandages souples à usage dans une roue agricole. Selon un premier type, le bandage est réalisé à partir d'un bandage pneumatique, typiquement en rechapant un pneumatique de véhicule automobile. Le bandage souple présente alors une enveloppe dont le profil est ouvert sur la face interne du bandage. Le bandage se monte sur le corps de roue par l'intermédiaire de talons, qui forment chacun la zone terminale d'un flanc respectif. Le bandage comprend des renforts métalliques, sous la forme de tringles, dans les talons du fait que le bandage pneumatique dont il est issu nécessite des renforts de ce type pour sa fonction pneumatique. Ces tringles rigidifient le bandage et contribuent à son maintien sur le corps de roue.

Dans EP 0 223 134 B2 et EP 0 245 648 B2, des bandages pneumatiques de camions sont montés sur un support tubulaire afin de former un rouleau à usage agricole. Ces bandages sont maintenus sur le support grâce à une paire d'anneaux de blocage, qui se monte sur le support, à l'intérieur de l'ouverture et à proximité des talons du bandage, et un mécanisme tendeur, que l'on actionne pour écarter ces anneaux l'un de l'autre et serrer les talons du bandage contre des rebords du support.

Le document EP0159274 A2 montre un kit comprenant un bandage souple présentant une chambre creuse et une entretoise tubulaire disposée dans ladite chambre creuse.

À l'usage, les bandages agricoles issus de bandages pneumatiques se révèlent assez peu déformables, principalement du fait de la rigidité des bandages pneumatiques dont ils sont issus.

Selon un second type de bandages, l'enveloppe présente au contraire un profil fermé dont une partie, la semelle, relie les flancs entre eux à l'opposé de la bande de roulement. Le bandage se monte sur le corps de roue par l'intermédiaire de cette semelle. Il s'agit alors d'un bandage spécifiquement conçu et réalisé pour un usage agricole, qui présente l'avantage de se déformer plus que les bandages issus de bandages pneumatiques. Un tel bandage est fabriqué à partir d'une section de profilé en élastomère que l'on referme sur elle-même en un boudin que l'on fait cuire dans un moule. Un exemple de bandage de ce type est décrit dans FR 3 004 384 A1.

Depuis quelques temps déjà, notamment à l'initiative de la Demanderesse, un autre type de bandage a vu le jour, dans lequel l'enveloppe est formée directement par injection de matière élastomère dans un moule.

La fabrication de bandages par injection est particulièrement avantageuse, en ce qu'elle requiert moins d'interventions manuelles et s'accompagne de moins de rebus qu'une fabrication basée sur l'extrusion d'un profil. La fabrication par injection est également plus rapide.

Toutefois, cette fabrication par injection implique de modifier sensiblement le profil de l'enveloppe par rapport aux bandages extrudés. Il est en effet très difficile de réaliser des enveloppes au profil fermé et, plus généralement, une attention particulière doit être portée, lors de la conception du bandage, à la face interne de celui-ci. Entre autres choses, le bandage doit pouvoir être aisément retiré du noyau du moule après cuisson.

Dans ce contexte, la Demanderesse a conçu un bandage à usage agricole dont une partie de l'ébauche correspondant à la semelle est réalisée en deux portions disjointes, chacune attachée à un flanc respectif. Ces portions peuvent être écartées l'une de l'autre pour faciliter le démoulage de l'ébauche. Elles se rejoignent et s'assemblent par coopération de forme pour constituer la semelle du bandage. Une portion qui fait saillie radialement vers l'intérieur du bandage, à la manière d'un talon, contribue à fixer ce bandage au corps de roue. En particulier, ce talon peut être coincé entre deux flasques homologues formant le corps de roue.

Dans FR 3 028 136 A1, la Demanderesse est allée plus loin encore en proposant un bandage dépourvu de semelle. Le bandage proposé comprend une enveloppe généralement annulaire avec deux parties formant flancs et une partie formant bande de roulement reliant les flancs entre eux. L'enveloppe présente une ouverture opposée à la bande de roulement. Le corps de roue comprend une paire de flasques et une entretoise en forme de disque, intercalée entre ces flasques et fixée à ces derniers. Le bandage est monté sur le corps de roue de manière que l'entretoise soit disposée en travers de son ouverture, tandis que les flasques sont agencés de manière à bloquer les flancs de l'enveloppe contre l'entretoise, au moins au voisinage de l'ouverture. Pour ce faire, les extrémités des flancs sont conformées selon un profil en bec et coopèrent avec des rebords des flasques de forme complémentaire.

En l'absence de semelle sur le bandage, FR 3 028 136 propose en quelque sorte de modifier le corps de roue par rapport à un corps classique afin d'y assurer le maintien du bandage.

Ce maintien est particulièrement important, car en travail, l'outil est soumis à des conditions difficiles, liées par exemple à une avance rapide de la machine ou un terrain irrégulier, voire accidenté. En outre, du fait que l'outil peut être amené à travailler selon une direction qui peut être de biais par rapport à la direction d'avance ou prendre des virages, il s'exerce fréquemment des efforts sur le bandage qui tendent à le faire déjanter, c'est-à-dire à lui faire quitter le siège du corps de roue.

Cette difficulté se trouve surmontée dans les bandages agricoles issus de bandages pneumatiques du fait des tringles intégrées aux talons. Pourtant, on ne souhaite pas équiper les bandages injectés de tringles de ce type afin de conserver la capacité de ces bandages à se démouler aisément et à se déformer pendant le travail.

Des considérations similaires se retrouvent dans le cas d'un outil agricole en forme de rouleau, comprenant un support tubulaire et une pluralité de bandages souples montée sur ce support, cette pluralité de bandages se trouvant intercalée entre deux flasques qui se montent chacun à une extrémité respective du support.

La roue agricole de FR 3 028 136 donne globalement satisfaction. La Demanderesse a cherché à aller plus loin encore et s'est fixé comme objectif de prévoir un bandage à profil ouvert qui puisse se monter aisément sur un corps de roue ou un support tubulaire classique, dont le bord de jante ou les flasques d'extrémité sont dépourvus de becs, et plus généralement de portion faisant saillie axialement vers l'intérieur d'une portion radialement plus interne de ce bandage.

À cette fin on propose un kit destiné à former un outil agricole à partir d'un corps de roue ou un support de rouleau, ce kit comprenant un bandage souple présentant une chambre creuse et une surface interne autour de cette chambre creuse. Le bandage souple présentant en outre une ouverture circulaire sur la chambre creuse et une paire de talons bordant cette ouverture circulaire et par l'intermédiaire de laquelle le bandage souple se monte autour du corps de roue ou du support de rouleau. Le kit comprend en outre une entretoise au moins partiellement tubulaire avec deux faces d'extrémités axialement opposées. Au moins sur une partie correspondant à l'un au moins des talons, la surface interne s'étend de manière généralement tronconique, en s'évasant radialement vers l'extérieur du bandage souple. L'une au moins des faces d'extrémité de l'entretoise présente au moins une surface saillante axialement. L'entretoise est conformée de manière à se placer en travers de l'ouverture du bandage souple de manière que la surface saillante soit apte à engager la surface interne dans une zone de ladite partie correspondant au talon.

Le kit proposé permet de réaliser aisément une roue à usage agricole ou un rouleau à partir d'un corps de roue ou d'un support de rouleau classique, du moins dans le domaine agricole. L'entretoise peut être installée dans le bandage préalablement au montage de l'ensemble formé du bandage et de cette entretoise sur le corps de roue ou le support de rouleau.

L'entretoise assure seule le maintien du bandage sur le corps de roue, sans besoin de mécanisme tendeur ou analogue. Les talons présentent un profil trapézoïdal au moins sur leur portion disposée à l'intérieur de l'entretoise qui contribue grandement au verrouillage du bandage sur le corps de roue ou le support de rouleau.

L'engagement de l'entretoise avec la surface interne du bandage, au niveau du talon, permet non seulement d'annuler un jeu axial de montage entre le bandage et la jante, mais encore le jeu de montage radial, grâce à la forme tronconique de cette surface. On remplace ainsi les ceintures qui sont habituellement conformées dans la semelle des bandages agricoles.

On propose également un outil agricole comprenant un corps de roue ou un support de rouleau, un bandage souple présentant une chambre creuse et une surface interne autour de cette chambre creuse. Le bandage souple présente en outre une ouverture circulaire sur la chambre creuse et une paire de talons bordant cette ouverture circulaire et par l'intermédiaire de laquelle le bandage souple est monté autour du corps de roue ou du support de rouleau. L'outil comprend en outre une entretoise au moins partiellement tubulaire avec deux faces d'extrémités axialement opposées. Au moins sur une partie correspondant à l'un au moins des talons, la surface interne s'étend de manière généralement tronconique, en s'évasant radialement vers l'extérieur du bandage souple. L'une au moins des faces d'extrémité de l'entretoise présente au moins une surface saillante axialement. L'entretoise est placée en travers de l'ouverture du bandage souple de manière telle que la surface saillante engage la surface interne dans une zone de ladite partie correspondant au talon.

D'autre caractéristiques et avantages de l'invention apparaitront à la lecture de la description détaillée ci-après, faite en relation avec les dessins, sur lesquels :
- la figure 1 représente une roue selon l'invention, vue de face ;
- la figure 2 représente la roue de la figure 1, vue en coupe selon une ligne II-II ;
- la figure 3 représente un éclaté de la roue de la figure 1 ;
- la figure 4 représente un détail IV de la figure 2 ;
- la figure 5 représente une variante de réalisation de la roue de la figure 1, dans une vue analogue à la figure 4 ;
- la figure 6 représente la roue de la figure 5, dans une vue analogue à la figure 2 ;
- la figure 7 représente un outil agricole réalisé à partir de la roue des figures 5 et 6 ;
- la figure 8 représente une autre variante de réalisation de la roue de la figure 1, vue de face ;
- la figure 9 représente la roue de la figure 8 en perspective isométrique ;
- la figure 10 représente la roue de la figure 8 en perspective isométrique avec un bandage partiellement tronqué ;
- la figure 11 représente la roue de la figure 8, vue en coupe selon une ligne XI-XI ;
- la figure 12 représente un détail XII de la figure 11 ;
- la figure 13 représente une portion d'un bandage de la roue des figures 8 à 12, seul et vu en coupe selon la ligne XI-XI ;
- la figure 14 représente une portion d'une entretoise de la roue des figures 8 à 12, seule et vue en coupe selon la ligne XI-XI ;
- la figure 15 représente une variante du bandage de la figure 13 ;
- la figure 16 représente une portion d'une entretoise de la roue des figures 5 et 6, seule et dans une vue analogue à la figure 5 ;
- la figure 17 représente une variante de l'entretoise de la figure 14 ;
- la figure 18 représente une variante du bandage de la figure 15 ;
- la figure 19 représente l'entretoise de la figure 14 vue de face ;
- la figure 20 représente une variante de l'entretoise de la figure 19
- la figure 21 représente un rouleau selon l'invention, vu en coupe longitudinale ;
- la figure 22 représente un détail XXII du rouleau de la figure 21 ;
- la figure 23 représente une variante du rouleau de la figure 21 ;
- la figure 24 représente un détail XXIV du rouleau de la figure 23 ;
- la figure 25 représente une variante du rouleau de la figure 23 ;
- la figure 26 représente un détail XXVI du rouleau de la figure 25 ;
- la figure 27 représente une variante de réalisation de la roue de la figure 1, dans une vue analogue à la figure 2 ;
- la figure 28 est analogue à la figure 27, pour une autre variante de roue.

Les dessins et la description ci-après contiennent pour l'essentiel des éléments de caractère certain. Ils pourront donc non seulement servir à mieux faire comprendre la présente invention, mais aussi contribuer à sa définition, le cas échéant.

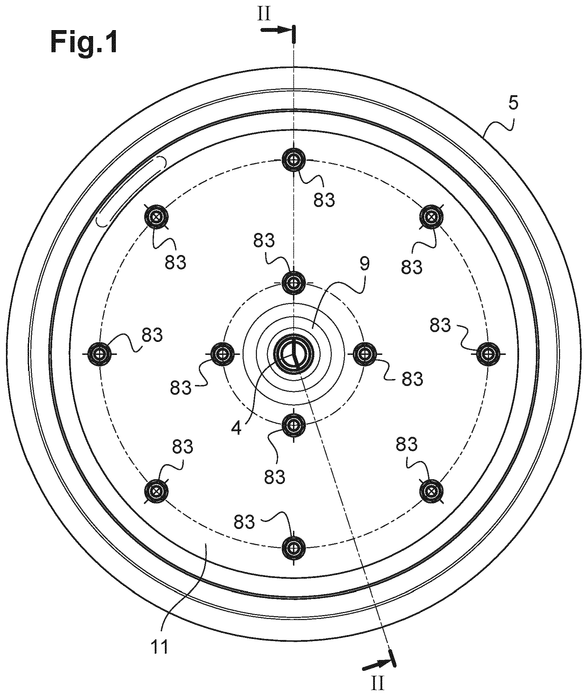

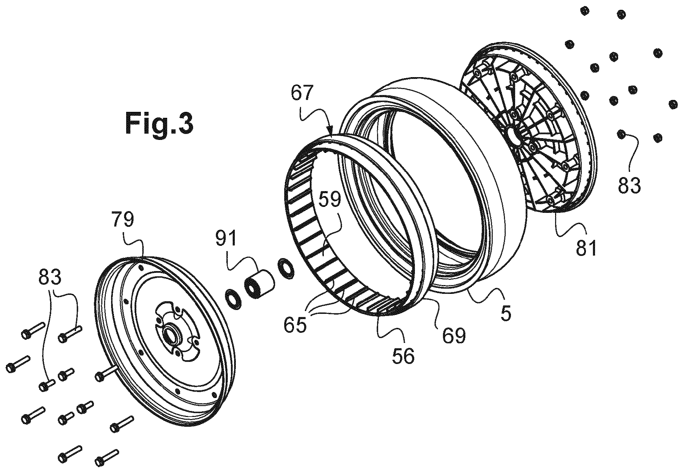

On fait référence aux figures 1 à 4.

Un outil agricole, destiné au travail des champs, est conformé en une roue 1. Cette roue 1 comprend un corps 3 présentant une allure générale de révolution, autour d'un axe qui coïncide avec un axe central 4 de la roue 1. La roue 1 est équipée d'un bandage souple 5 monté autour du corps 3. Ce bandage 5 présente une forme de révolution dont un axe central coïncide avec l'axe central 4 de la roue 1 lorsque le bandage 5 est monté sur le corps 3.

On appelle ici "corps de roue" ("body" ou "wheel body" en anglais) la partie pratiquement indéformable, ou rigide, de la roue 1, par opposition à sa partie essentiellement déformable, ou souple, que constitue le bandage 5.

Le bandage 5 présente une face périphérique radialement externe destinée à venir au contact du sol et une face périphérique radialement interne, opposée à la face externe, par l'intermédiaire de laquelle le bandage 5 vient s'appuyer sur une partie périphérique du corps 3, ou jante 7.

On appelle "jante" ("rim" ou "wheel rim" en anglais) la portion périphérique du corps 3 destinée notamment à supporter le bandage 5. On appelle "moyeu" ("hub" ou "wheel hub" en anglais) la portion centrale du corps 3 par l'intermédiaire de laquelle la roue se monte, à rotation, sur un axe. Le reste du corps 3, en particulier la portion de ce corps 3 qui relie le moyeu à la jante 7 peut être appelé "voile" ("disc", "wheel disc", "dish", ou encore "wheel dish" en anglais). Le corps 3 est ainsi essentiellement constitué de la jante 7, d'un moyeu 9 et d'un voile 11.

Contrairement à l'usage que l'on en fait parfois, le terme "jante" ne désigne pas ici l'intégralité du corps 3.

Le corps 3 est de conception classique. Ce corps 3 présente une première face latérale, ou face intérieure 13, et une seconde face latérale, axialement opposée à la première, ou face extérieure 15. Dans l'exemple illustré ici, où la roue 1 est destinée à être utilisée, en combinaison d'un disque semoir, en tant que jauge, la face intérieure 13 correspond à la face de la roue 1 dirigée vers ce disque.

La jante 7 présente une allure de révolution autour de l'axe central du corps 3. La jante 7 comprend une large portion médiane 17 dont une section axiale offre une paire de surfaces de siège 18 au bandage 5. La jante 7 présente un premier rebord, ou rebord intérieur 19, qui borde la portion médiane 17 du côté de la face intérieure 13 du corps 3, et un second rebord, ou rebord extérieur 21, axialement opposé au premier et qui borde la portion médiane 17 du côté de la face extérieure 15 du corps 3. La portion médiane 17 de la jante 7 est essentiellement cylindrique. Les sièges 18 sont généralement cylindriques et séparés l'un de l'autre axialement par une partie de la portion médiane 17 formant un fond de jante 20. Le rebord intérieur 19 et le rebord extérieur 21 font saillie radialement de la portion médiane 17 de la jante 7. Le fond 20 de la jante 7 est radialement en retrait des sièges 18.

Le bandage 5 comprend une enveloppe souple 23 généralement torique, dont l'axe coïncide avec l'axe central du bandage 5. L'enveloppe 23 délimite en partie au moins un espace intérieur généralement creux, ou chambre 25, ouvert sur la face interne du bandage 5. L'enveloppe 23 comprend une portion radialement opposée à la face interne du bandage 5 conformée en une bande de roulement 27, par l'intermédiaire de laquelle la roue 1 va se trouver en contact avec le sol. Cette bande 27 fait partie de la face externe du bandage 5.

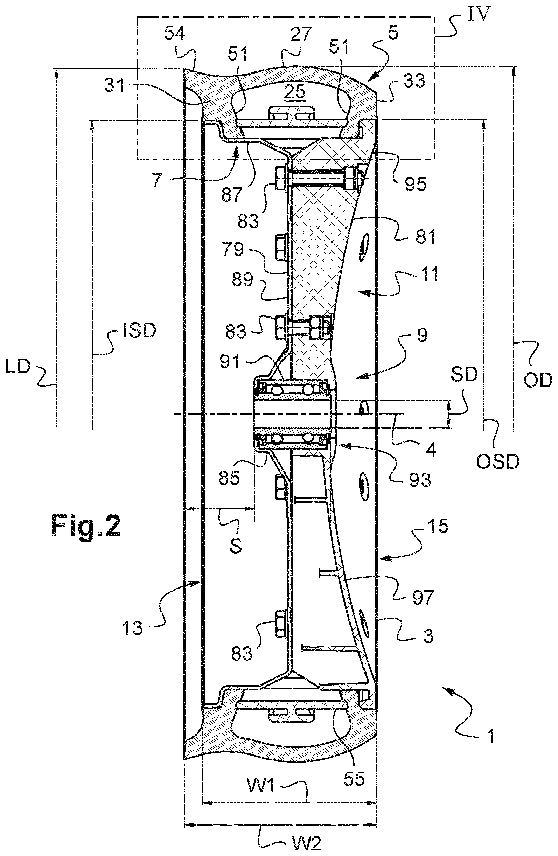

L'enveloppe 23 comporte en outre deux portions axialement opposées l'une à l'autre qui forment les flancs du bandage 5 : un flanc intérieur 31 proche de la face intérieure 13 du corps 3, à gauche de la chambre 25 sur la figure 2, et un flanc extérieur 33, proche de la face extérieure 15, à droite. Chacun du flanc intérieur 31 et du flanc extérieur 33 se raccorde à une extrémité axiale respective de la bande 27. Lorsqu'on regarde la face externe du bandage 5, cette bande 27 s'étend selon un profil généralement bombé, du flanc intérieur 31 au flanc extérieur 33, avec un sommet 29. La distance du sommet 29 à l'axe central du bandage 5 correspond à un demi diamètre extérieur OD de ce bandage 5. Par exemple, le diamètre OD est voisin de 403 millimètres. Ici, le sommet 29 se trouve à peu près à égale distance axialement du flanc intérieur 31 et du flanc extérieur 33.

Le flanc intérieur 31 et le flanc extérieur 33 s'étendent chacun généralement de manière radiale, c'est-à-dire perpendiculairement à l'axe central du bandage 5. À l'opposé de la bande 27, le flanc intérieur 31 et le flanc extérieur 33 se prolongent chacun radialement par une portion conformée en talon, à savoir un talon intérieur 35 pour le flanc intérieur 31 et un talon extérieur 37 pour le flanc extérieur 33. Le talon intérieur 35 et le talon extérieur 37 peuvent être vus comme des extrémités radiales du flanc intérieur 31 et du flanc extérieur 33, respectivement. Ces extrémités sont affinées par rapport au reste des flancs intérieur 31 et extérieur 33. Le talon intérieur 35 et le talon extérieur 37 s'appuient chacun sur un siège 18 respectif de la jante 7 par l'intermédiaire d'une surface d'extrémité radiale généralement cylindrique. Le talon intérieur 35 et le talon extérieur 37 assurent un contact entre le bandage 5 et la jante 7 du corps 3. Le bandage 5 est dépourvu d'éléments de renfort métalliques, notamment de tringles, au moins dans les talons intérieur 35 et extérieur 37.

Le talon intérieur 35 et le talon extérieur 37 bordent une ouverture de la chambre 25 sur la face interne du bandage 5. Le bandage 5 se trouve de ce fait dépourvu de fourreau, parfois également appelé *"semelle",* c'est-à-dire d'une portion de l'enveloppe 23 reliant le flanc intérieur 31 au flanc extérieur 33 à l'opposé de la bande 27 et/ou s'étendant essentiellement de manière axiale depuis une extrémité de ces flancs éloignée de la bande 27 vers l'intérieur du bandage 5.

En l'absence de semelle ou analogue, l'enveloppe 23 présente un profil largement ouvert sur la face interne du bandage 5. Ce profil ouvert simplifie grandement la fabrication du bandage 5. L'enveloppe 23 peut être réalisée par moulage, avec des moules à injection de forme simple, contrairement aux bandages classiques dont l'enveloppe présente un profil fermé, même partiellement. La fabrication d'une enveloppe fermée par injection s'accompagne de difficultés liées au démoulage. Les bandages dont l'enveloppe présente un profil fermé sont généralement fabriqués par extrusion d'une bande de profilé fermé et jonction d'une portion de cette bande.

Le bandage 5 est réalisé en un matériau souple, de type élastomère, de préférence en caoutchouc naturel ou synthétique, éventuellement mélangés l'un à l'autre. Ce matériau a de préférence une dureté Shore comprise entre 45 et 75. L'enveloppe présente une capacité importante à se déformer et reprendre sa forme initiale, du fait de la combinaison d'un matériau souple et de la chambre creuse 25. L'enveloppe se déforme notamment lorsque la roue 1 travaille, sollicitée par un effort de réaction du sol. Cet effort s'exerce principalement radialement vers l'axe central de la roue 1. Cela distingue fortement le bandage 5 des bandages pneumatiques, en particulier ceux utilisés pour la liaison au sol de véhicules automobiles.

Le profil ouvert de l'enveloppe 23 et l'absence de tringles facilite le démoulage du bandage 5. Ce profil ouvert facilite l'extraction de la partie du moule formant noyau au travers de l'ouverture de l'enveloppe 23.

Sur sa face interne, le bandage 5 présente un premier rebord périphérique, ou rebord intérieur 39, qui termine le flanc intérieur 31 et un second rebord périphérique, ou rebord extérieur 41, qui termine le flanc extérieur 33. Le rebord intérieur 39 et le rebord extérieur 41 sont conformés chacun d'une manière telle que leur forme corresponde respectivement à celle du rebord intérieur 19 et du rebord extérieur 21 de la jante 7. Le rebord intérieur 19 et le rebord extérieur 21 de la jante 7 offrent ainsi des surfaces de siège supplémentaires au bandage 5, lequel s'y appuie par l'intermédiaire de ses rebords intérieur 39 et extérieur 41.

En particulier ici, le rebord intérieur 39 et le rebord extérieur 41 du bandage 5 comprennent chacun une surface de bord 43 respective, de forme de révolution et centrée sur l'axe de ce bandage 5, destinée à reposer sur une surface homologue 45 du rebord intérieur 19 et du rebord extérieur 21 de la jante 7. Les surfaces de bord 43 et leurs surfaces homologues 45 sont généralement cylindriques. Les surfaces de bord 43 terminent chacune radialement l'un du flanc intérieur 31 et du flanc extérieur 33. La surface homologue 45 du rebord extérieur 21 se trouve à une distance de l'axe du corps 3 qui correspond à la moitié du diamètre OSD de siège externe. Par exemple, le diamètre OSD est voisin de 340 millimètres. La surface homologue 45 du rebord intérieur 19 se trouve à une distance de l'axe du corps 3 qui correspond à un demi diamètre de siège interne ISD. Par exemple, le diamètre ISD est voisin de 340 millimètres.

Ici, le rebord intérieur 39 et le rebord extérieur 41 comprennent en outre chacun une surface respective du talon intérieur 35 et du talon extérieur 37 orientée de manière opposée à la chambre 25, ou surface extérieure 47. La surface extérieure 47 du talon intérieur 35 et celle du talon extérieur 37 se raccordent respectivement à la surface de bord 43 du rebord intérieur 39 du bandage 5 et à celle du rebord extérieur 41, ici par un congé.

La surface extérieure 47 du talon intérieur 35 et celle du talon extérieur 37 sont en correspondance de forme avec une partie au moins des rebords intérieur 19 et extérieur 21 de la jante 7. Ces parties forment des butées axiales 48 contre lesquelles le talon intérieur 35 et le talon extérieur 37 viennent en appui selon une direction principalement axiale.

Dans le mode de réalisation représenté ici, la surface extérieure 47 du talon intérieur 35 est généralement tronconique et s'évase selon une direction radialement vers l'extérieur du bandage 5, d'une manière correspondant à la surface de butée axiale 48 du rebord intérieur 19 de la jante 7. La surface extérieure 47 du talon extérieur 37 est généralement en forme de couronne, d'une manière correspondant à la surface de butée axiale 48 du rebord extérieur 21 de la jante 7.

Le flanc intérieur 31 et le flanc extérieur 33 présentent chacun une surface dirigée de manière opposée à la chambre 25, ou surface extérieure 49. La surface extérieure 49 du flanc intérieur 31 et celle du flanc extérieur 33 se raccordent chacune à la surface de bord 43 du rebord intérieur 39 et du rebord extérieur 41 du bandage 5, respectivement.

La surface extérieure 47 du talon intérieur 35 et celle du talon extérieur 37 se raccordent à la surface terminale du talon intérieur 35 et à celle du talon extérieur 37, respectivement, ici par un arrondi.

De préférence, les surfaces de sièges 18 et les surfaces d'extrémité radiale des talons intérieurs 35 et extérieurs 37 sont dimensionnées de telle manière qu'il existe un léger jeu entre ces surfaces, en particulier pour permettre le montage du bandage 5 sur la jante 7 du corps 3. Un tel jeu est par exemple inférieur à 1 millimètre au diamètre.

Le bandage 5 présente une surface intérieure qui entoure la chambre 25. Cette surface comprend deux portions qui forment des parois latérales 51 de la chambre 25 et une paroi de fond 53 à laquelle se raccordent les parois latérales 51, ici par l'intermédiaire d'arrondis. Les parois latérales 51 comprennent chacune un premier tronçon 51A correspondant à l'un du flanc intérieur 31 et du flanc extérieur 33 (à une surface de ce flanc orientée vers la chambre 25) et un second tronçon 51B correspondant à l'un du talon intérieur 35 et du talon extérieur 37 (à une surface de ce talon orientée vers la chambre 25) et qui prolonge le premier tronçon 51A vers l'intérieur du bandage 5.

La surface intérieure du flanc intérieur 31 et du talon intérieur 35, d'une part, et la surface intérieure du flanc extérieur 33 et du talon extérieur 37, d'autre part, forment les parois latérales 51 de la chambre 25. Le fond 53 de cette chambre 25 est formé par une surface de la bande 27 dirigée vers la chambre 25.

Les parois latérales 51 de la chambre 25 sont généralement tronconiques, centrées sur l'axe du bandage 5 et s'évasent dans la direction radialement vers l'extérieur du bandage 5, de la face interne de ce bandage 5 au fond 53 de cette chambre 25. Ici, les parois latérales 51 de la chambre 25 sont mutuellement symétriques par rapport à un plan normal à l'axe du bandage 5.

De manière connue, le bandage 5 présente une lèvre annulaire 54 qui fait saillie de l'enveloppe 23 radialement et axialement vers l'extérieur de ce bandage 5. Cette lèvre 54 s'étend sensiblement le long de la circonférence du bandage 5. La distance de l'extrémité de la lèvre 54 à l'axe central du bandage 5 correspond à un demi diamètre LD de la lèvre 54. Par exemple, le diamètre LD est voisin de 400 millimètres. La distance qui sépare cette extrémité de la surface extérieure 49 du flanc extérieur 33 selon la direction axiale du bandage 5 correspond à la largeur W2 de la lèvre 54. Par exemple, la largeur W2 est voisine de 111 millimètres.

Sur le talon intérieur 35 et le talon extérieur 37, le bandage 5 présente ici à chaque fois une rainure circulaire 55 respective, centrée sur l'axe de ce bandage 5 et ouverte sur sa chambre 25. Chaque rainure 55 est ménagée dans l'une des parois latérales 51 de la chambre 25, sur le second tronçon 51B de celle-ci. Autrement dit, sur la surface intérieure tronconique des talons intérieur 35 et extérieur 37.

Ici, les rainures 55 se trouvent chacune en une position radiale qui correspond à la limite radialement extérieure du talon intérieur 35 ou du talon extérieur 37. La portion du bandage 5 qui se trouve radialement au-delà d'une rainure 55 correspond au flanc intérieur 31 ou au flanc extérieur 33. Radialement au-delà de chaque rainure 55 se trouve le premier tronçon 51A d'une paroi latérale 51 respective de la chambre 25. Radialement en deçà de chaque rainure 55 se trouve le second tronçon 51B d'une paroi latérale 51 respective de la chambre 25.

Chaque paroi latérale 51 de la chambre 25 comprend un second tronçon 51B qui s'étend de manière généralement tronconique, en s'évasant radialement vers l'extérieur du bandage 5, sur une partie au moins du talon intérieur 35 ou du talon extérieur 37, et cette partie court depuis une rainure circulaire 55 radialement vers l'intérieur du bandage souple 5.

Ici, les seconds tronçons 51B des parois latérales 51 de la chambre 5 s'étendent de manière généralement tronconique sur l'ensemble de leur talon respectif, depuis la rainure 55 jusqu'à l'extrémité radiale de ce talon qui se trouve en contact avec la jante 7. Les talons intérieur 35 et extérieur 37 présentent chacun un profil en forme de trapèze, ici rectangle pour ce qui concerne le talon extérieur 37. En outre, les premiers tronçons 51A des parois latérales 51 de la chambre 5 s'étendent ici également de manière généralement tronconique, depuis la rainure 55 radialement vers l'extérieur du bandage 5, en particulier jusqu'au fond 53 de la chambre 25. En d'autres termes, les parois latérales 51 de la chambre 25 présentent une paire de portions tronconiques qui s'étendent en partie au moins sur les talons intérieur 35 et extérieur 37, au moins sur une partie de ceux-ci qui se trouve radialement vers l'intérieur du bandage 5.

La roue 1 comprend une pièce de révolution conformée en entretoise 56, laquelle se monte autour du corps 3, sur la jante 7, en travers de l'ouverture sur la chambre 25. L'entretoise 56 comprend une paire de faces d'extrémités axiales, agencées pour venir en regard des talons intérieur 35 et extérieur 37 lorsque l'entretoise 56 se trouve en travers de l'ouverture du bandage 5 sur la chambre 25.

Ces faces d'extrémités axiales de l'entretoise 56 sont agencées de manière à s'engager, en partie au moins, dans les parois latérales 51 de la chambre 25, à chaque fois au niveau d'un second tronçon 51B respectif. Cet engagement résulte d'une pénétration d'une partie au moins de ces faces d'extrémités axiales de l'entretoise 56 dans les parois latérales 51. Chaque face d'extrémité axiale de l'entretoise 56 présente une surface qui fait saillie axialement de cette face et par l'intermédiaire de laquelle se fait l'engagement. Chaque surface saillante pénètre la paroi latérale 51 de la chambre 25, sur une partie de celle-ci correspondant aux talons 35,37.

Cette pénétration peut résulter d'une déformation locale (écrasement) des parois latérales 51, dans la zone d'engagement, contre les surfaces saillantes de l'entretoise 56. Ici, les extrémités axiales de l'entretoise 56, qui portent chacune une surface saillante respective, s'engagent dans chacune des rainures circulaires 55 du bandage 5. Ces portions d'extrémités axiales sont conformées d'une manière correspondant aux rainures circulaires 55, ici en trapèzes.

Il importe que les portions d'extrémités de l'entretoise 56 offrent chacune une surface d'extrémité saillante respective, laquelle permet à l'entretoise 56 d'engager les parois latérales 51, que celles-ci soient ou non pourvues d'une rainure du type des rainures circulaires 55. Une surface d'extrémité saillante dépasse d'une face d'extrémité plane et perpendiculaire à l'axe central de l'entretoise 56 correspondant à un profil d'entretoise tubulaire.

Une fois montée en travers de l'ouverture sur la chambre 25, l'entretoise 56 définit un écartement mutuel du talon intérieur 35 et du talon extérieur 37 selon la direction axiale du bandage 5. Cet écartement est supérieur à l'écartement mutuel des talons intérieur 35 et extérieur 37 au repos. L'entretoise 56 maintient cet écartement.

Cet écartement est tel qu'avant montage du bandage 5 et de l'entretoise 56 sur le corps 3, la distance qui sépare axialement la surface extérieure 47 du talon intérieur 35 de celle du talon extérieur 37 est supérieure à la distance qui sépare axialement les surfaces de butées axiales 48 destinées à les recevoir sur la jante 7.

Une fois l'entretoise 56 et le bandage 5 montés sur le corps 3, l'entretoise 56 contribue à établir et maintenir un contact de la surface extérieure 47 des talons intérieur 35 et extérieur 37 contre une surface de butée axiale 48 homologue des rebords intérieur 39 ou extérieur 41 de la jante 7. Le bandage 5 se trouve ainsi monté sur la jante 7 avec une contrainte axiale exercée par les surfaces de butées axiales 48 sur les talons intérieur 35 et extérieur 37. Cette contrainte axiale participe à l'engagement des portions d'extrémités de l'entretoise 56, et de leurs surfaces saillantes, dans les parois latérales 51 de la chambre 25, dans une zone où cette paroi est tronconique et s'évase radialement vers l'extérieur du bandage 5.

Ceci assure le maintien du bandage 5 autour du corps 3. Ce maintien s'apparente à un verrouillage du fait de l'engagement de l'entretoise 56 dans les talons du bandage 5 et du profil trapézoïdal de ces talons dans leur portion prise entre l'entretoise 56 et les sièges 18 de la jante 7. L'essentiel de la matière des talons intérieur 35 et extérieur 37 se trouve radialement en deçà de la zone d'engagement de l'entretoise 56 avec les parois latérales 51.

L'entretoise 56 présente un premier segment d'extrémité axiale et un second segment d'extrémité axiale qui sont conformés en correspondance chacun d'une rainure circulaire 55 respective. Le profil de l'entretoise 56 sur son premier segment d'extrémité axiale correspond au profil de l'une des rainures 55 tandis que le profil de l'entretoise sur son second segment d'extrémité axiale correspond au profil de l'autre des rainures 55. Le même profil d'entretoise 56 peut être utilisé en l'absence de rainure du type des rainures circulaires 55.

Lorsque le corps comporte deux flasques qui se montent l'un sur l'autre, le bandage 5 peut se monter sur l'un des flasques du corps de roue, par exemple le second flasque 81, une fois l'entretoise 55 logée l'ouverture du bandage 5. En particulier lorsque le bandage 5 est prévu avec des rainures circulaires du type des rainures circulaires 55, le bandage 5 peut se monter sur le flasque une fois l'entretoise 56 engagée dans les parois latérales 51. L'un du talon intérieur 35 et du talon extérieur 37 vient s'appuyer sur l'un des sièges 18, éventuellement avec un jeu radial lié au montage. On rapporte ensuite l'autre flasque du corps de roue, par exemple le premier flasque 79, sur le premier de manière que l'autre du talon intérieur 35 et du talon extérieur 37 viennent à son tour en appui contre l'autre siège 18, éventuellement avec un jeu de montage.

Ici, l'entretoise 56 présente une portion principale 57 généralement tubulaire, dont l'axe central coïncide avec l'axe 4 de la roue 1 une fois l'entretoise 56 montée sur le corps 3. Cette portion tubulaire 57 porte les portions d'extrémités axiales de l'entretoise 56. Les portions d'extrémités axiales de l'entretoise 56 correspondent à des portions d'extrémités axiales de sa portion principale 57.

La portion principale 57 présente un profil en forme générale de trapèze isocèle. Une surface cylindrique radialement intérieure 59 de la portion principale 57 correspond à la petite base de ce trapèze, tandis qu'une surface cylindrique radialement extérieure 61 correspond à la grande base. Les côtés du trapèze sont formés de deux surfaces d'extrémités axiales 63 qui forment les surfaces saillantes des extrémités de l'entretoise 56. Ces surfaces d'extrémités axiales 63 sont tronconiques, centrées sur l'axe de l'entretoise 56 et s'évasent radialement vers l'extérieur de cette dernière. La forme de ces surfaces d'extrémités axiales 63 correspond ici à la forme du fond des rainures circulaires 55. La même forme peut être utilisée sans les rainures circulaires 55. L'inclinaison des surfaces d'extrémités 63 de l'entretoise 56 relativement à une direction radiale est voisine de l'inclinaison des surfaces intérieures 51 du flanc interne 31 et du flanc externe 33. De préférence, elles présentent des demi-angles au sommet égaux à plus ou moins 5 degrés près. Grâce à leur forme saillante, ces surfaces d'extrémité 63 agissent à la manière de coins et bloquent les talons 35, 37 du bandage 5 contre les rebords de la jantes 7.

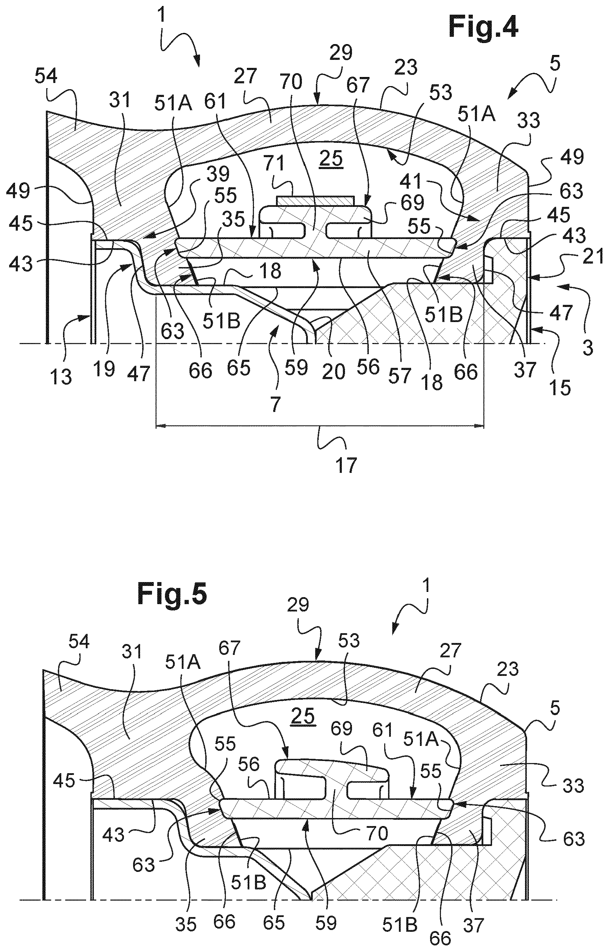

On vise une contrainte axiale résultant d'une compression axiale du bandage 5, au niveau de ses talons 35, 37, de l'ordre de 1 à 4 pour cent, soit ici par exemple de 1 à 3 millimètres environ. Pour augmenter encore la contrainte axiale appliquée au bandage 5, on peut envisager de conformer la surface extérieure 47 du talon extérieur 37 de manière qu'elle s'étende de manière tronconique, en s'évasant radialement vers l'intérieur, ou selon un profil avec un lobe faisant saillie axialement vers l'extérieur du bandage 5, tout en conservant le profil de la surface de butée axiale 48 de la figure 4.

L'entretoise 56 présente une face radialement interne par l'intermédiaire de laquelle l'entretoise 56 se monte sur la jante 7. Cette face interne présente une pluralité de nervures 65 qui fait saillie radialement vers l'intérieur de l'entretoise 56, ici de la surface intérieure 59 de la portion tubulaire 57.

Ici, chaque nervure 65 s'étend selon une direction axiale de l'entretoise 56. Cette dernière repose par l'intermédiaire des nervures 65 sur la jante 7, en particulier ici sur les sièges 18. Le diamètre intérieur des nervures 65 correspond au diamètre intérieur de l'entretoise 56 et au diamètre intérieure des talons 35 et 37. Les sièges 18 de la jante 7 sont occupés par les talons intérieur 35 et extérieur 37 ainsi que par les nervures 65 de l'entretoise 56.

Les extrémités longitudinales 66 des nervures 65 sont en retrait des faces d'extrémités de l'entretoise 56. Les extrémités longitudinales 66 des nervures 65 sont conformées d'une manière correspondant aux parois latérales 51 de la chambre 25 sur une partie de celles-ci correspondant aux talons 35, 37, notamment radialement en deçà des rainures circulaires 55 ou de la zone d'engagement des extrémités de l'entretoise 56. Les surfaces d'extrémité 66 des nervures 65 sont ici tronconiques et s'évasent radialement vers l'extérieur. L'inclinaison de ces extrémités longitudinales 66 relativement à une direction radiale est voisine de celle des parois latérales 51, ici sur une portion de celles-ci radialement en deçà des rainures circulaires 55. Les nervures 65 sont régulièrement réparties de manière angulaire sur la circonférence de la face interne de l'entretoise 56. Ces nervures 65 délimitent entre elles des espaces libres à l'intérieur desquels une partie de la matière des talons intérieur 35 et extérieur 37 vient fluer sous l'action de l'entretoise 56. Ceci contribue à verrouiller le bandage 5 sur la jante 7 et à maintenir ce verrouillage, y compris dans des conditions de travail difficiles. Les extrémités longitudinales 66 des nervures 65 viennent en appui contre les talons 35, 37 de telle sorte qu'elles participent à et/ou augmentent la compression axiale du bandage 5 au niveau de ces talons 35, 37. Ces extrémités longitudinales 66 contribuent au maintien du bandage 5 sur la jante 7.

Une dimension selon la direction axiale de la surface intérieure 59 de l'entretoise 56 est supérieure à une dimension minimale selon cette direction de l'ouverture sur la chambre 25, à laquelle s'ajoute, le cas échéant, la profondeur des rainures circulaires 55.

L'entretoise 56 présente ici une surface de butée 67 optionnelle pour la bande 27 et destinée à en limiter le déplacement lorsque l'enveloppe 23 se déforme. Cette surface de butée 67 fait saillie radialement vers l'extérieur du reste de l'entretoise 56. Cette surface de butée 67 est ici portée par une portion secondaire 69 annulaire autour de la portion principale 57 et qui se raccorde à la surface extérieure 61 de cette dernière. La portion secondaire 69 de l'entretoise 56 fait saillie de la portion principale 57 de celle-ci, radialement vers l'extérieur. Cette portion secondaire 69 se raccorde à la surface extérieure 61 de l'entretoise 55 par une nervure périphérique 70 qui s'entend radialement. Cette nervure peut être discontinue sur le pourtour de la portion secondaire 69. Ici la surface de butée 67 est généralement cylindrique et son axe coïncide avec l'axe central de l'entretoise 55. Axialement, cette surface de butée se situe en outre au droit du sommet 29 de la bande 27.

D'autres agencements peuvent être envisagés pour la surface de butée 67, par exemple tronconique ou ondulée.

Ici, cette surface de butée 67 supporte un capteur de pression 71. La capteur 71 est capable de réagir à un contact d'une partie radialement en regard de la bande 27 en mesurant une intensité d'effort résultant du sol.

L'écartement entre le flanc interne 31 et le flanc externe 33, i.e. la distance qui sépare leur surface extérieure respective dans la direction axiale, correspond à une largeur W du bandage 5.

Lorsqu'un effort s'exerce sur la bande 27 essentiellement dirigé radialement vers l'axe central de ce bandage 5, l'enveloppe tend à se déformer d'une manière telle que la bande 27 vienne contacter la surface de butée 67. Un tel effort résulte typiquement de la réaction du sol lorsque la roue 1 travaille.

Par exemple, une épaisseur du flanc intérieur 31 peut être comprise entre 10 et 20 millimètres tandis que l'épaisseur du flanc extérieur 33 peut être comprise entre 10 et 20 millimètres.

Le flanc extérieur 33 et le flanc intérieur 31 présentent des diamètres extérieurs voisins l'un de l'autre.

L'entretoise 56 est rigide. Elle peut être réalisée en matériau synthétique, par exemple en matériau plastique, tel que le polyéthylène par exemple, ou métallique, tel que l'acier ou un alliage d'aluminium.

Ici, le corps de roue 3 est formé d'un premier flasque 79 et d'un second flasque 81, chacun en forme générale de disque. Le premier flasque 79 et le second flasque 81 se montent l'un sur l'autre pour former le corps de roue 3. L'entretoise 56 ne fait pas partie du corps 3. Cette entretoise se rapporte sur corps 3 une fois installée à l'intérieur du bandage 5.

Le premier flasque 79 et le second flasque 81 présentent chacun un axe central, ou axe de révolution. À l'état assemblé du corps de roue, ces axes coïncident avec l'axe 4 de la roue 1.

Le premier flasque 79 et le second flasque 81 présentent chacun une face interne, non référencée, et une face externe opposée. La face externe du premier flasque 79 et la face externe du second flasque 81 correspondent respectivement à la face interne 13 et la face externe 15 du corps 3. Lors de l'assemblage du premier flasque 79 et du second flasque 81 l'un sur l'autre, leurs faces internes sont mises en appui l'une contre l'autre.

Le premier flasque 79 et le second flasque 81 sont fixés l'un à l'autre, ici de manière réversible, au moyen d'une pluralité des couples vis-écrou 83. Ces couples vis-écrou 83 sont répartis sur la surface du voile de roue.

Le premier flasque 79 comporte une partie centrale 85, une partie périphérique 87 et un voile 89 reliant la partie centrale 85 à la partie périphérique 87. Ici, le voile 89 est plein. En variante, le voile 89 peut être ajouré et/ou comprendre un ou plusieurs bras reliant la partie centrale 85 du premier flasque 79 à la partie périphérique 87 de ce dernier.

La partie centrale 85 forme une partie du moyeu 9. Cette partie centrale 85 est propre à recevoir un essieu ou une fusée destinés à supporter la roue 1 à rotation. La roue 1 comprend un palier rotatif 91 logé dans la partie centrale 85, ici sous la forme d'un roulement à double rangée de billes.

La partie périphérique 87 est de forme générale annulaire. La partie périphérique 87 porte le rebord intérieur 19 de la jante 7, l'une, adjacente au rebord intérieur 19, des surfaces de siège 18 et une partie du fond 20 de la jante 7. Du côté de la face externe, à gauche sur la figure 2, la partie centrale 85 est disposée en retrait par rapport rebord interne de la jante 7. Ce retrait est classiquement voisin de 40 millimètres.

Le premier flasque 79 est conformé en une pièce monobloc. Le premier flasque 7 est ici métallique, typiquement en acier ou alliage d'aluminium. Le premier flasque 79 est par exemple obtenu par estampage d'une tôle. Notamment, la partie périphérique 87 est obtenue par un pliage sur elle-même de la portion périphérique de la tôle, ce qui confère à cette partie périphérique 87 une forme de collerette. Le premier flasque 79 peut aussi être obtenu par moulage ou emboutissage.

Le second flasque 81 comprend une partie centrale 93, une partie périphérique 95 et un voile 97 reliant la partie centrale 93 à la partie périphérique 95.

La partie périphérique 95 du second flasque 81 porte le rebord extérieur 21 de la jante 7, l'autre surface de siège 18 et la partie restante du fond 20 de la jante 7. Le second flasque 81 est obtenu, par exemple, par injection de matière plastique. Le second flasque 81 présente alors des coûts faibles de matière première et de fabrication. Le second flasque 81 peut également être réalisé en métal, comme le premier flasque 79 ou à partir d'un matériau différent. Le premier flasque 79 en métal présente alors une résistance améliorée aux chocs, par exemple en cas de projections de pierres lors du roulage de la machine.

Le second flasque 81 peut prendre la forme d'une enveloppe consolidée par des parois internes de renfort, ou nervures, entre lesquelles de multiples cavités sont laissées vides. Les nervures confèrent au second flasque 81 une bonne résistance mécanique, comparable à une pièce métallique ou de plastique plein. Elles permettent d'assurer la résistance mécanique nécessaire avec peu de matière première. Le volume occupé par le premier flasque 7 est en grande partie creux.

La partie centrale 93 du second flasque 81 comprend une portion destinée à loger le reste du palier 91.

Une fois le bandage 5 enfilé sur la jante 7, le premier flasque 79 et le second flasque 81 supportent le bandage 5, ici chacun sensiblement pour moitié. La force radiale appliquée par le sol sur bandage 5 se répartit sensiblement de manière équivalente sur les flasques 79 et 81.

Le palier 91 est placé à cheval dans un alésage en deux parties ménagées dans les parties centrales du premier flasque 79 et du second flasque 81.

À mesure que l'on serre le second flasque sur le premier, on tend à rapprocher les surfaces de butées axiales 48 l'une de l'autre. On poursuit et on maintient l'engagement de l'entretoise 56 dans les parois latérales 51 de la chambre 25, du fait que l'écartement des surfaces de butées axiales 48 dans la direction axiale du corps 3 est inférieur à l'écartement selon cette direction des surfaces extérieures 47 des talons intérieur 35 et extérieur 37. En serrant, on vient comprimer le bandage 5 au niveau de ses talons intérieur 35 et extérieur 37, tout en engageant ces talons avec l'entretoise 56. À mesure que le jeu de montage axial diminue entre le bandage 5 et la jante 7 et que la compression axiale du bandage 5 augmente sur les talons 35, 37, par serrages du premier flasque 79 sur le second 81, le jeu de montage radial entre la jante 7 et le bandage 5 se réduit également, jusqu'à s'annuler, comme résultat de l'engagement de l'entretoise 56 sur une portion tronconique des talons 35, 37. Autrement dit, les surfaces saillantes des extrémités l'entretoise 56 coopèrent avec la forme tronconique des talons 35, 37 là où l'entretoise 56 les engage, de façon à assurer non seulement le blocage axial du bandage 5 sur le corps 3, mais aussi un blocage radial. Ceci se produit sans que les surfaces de butée axiales 48, ou autres surfaces de la jantes 7, ne produisent un verrouillage par coopération de forme avec les talons 35, 37.

La roue 1 est destinée à être montée dans un outil agricole, de manière telle que la face intérieure 13 du corps 3 se trouve en partie au moins en regard d'un outil en forme de disque. La face extérieure 15 du corps 3 se trouve alors orientée de manière opposée à ce disque.

La jante 7 est de type classique. Cette jante 7 ne présente aucune surface qui fasse saillie axialement vers l'intérieur d'une portion du bandage 5 radialement plus intérieure.

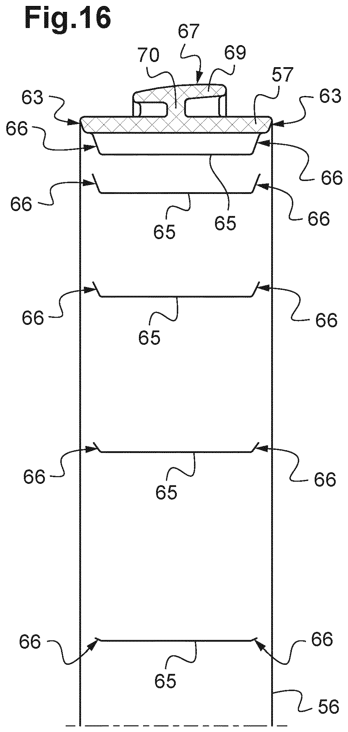

On fait référence aux figures 5 et 16.

Une variante 1 de la roue décrite en relation avec les figures 1 à 4 s'en distingue d'abord en ce que le flanc intérieur 31 est sensiblement plus épais que le flanc extérieur 33 tandis que la surface homologue 45 du rebord intérieur 19 de la jante 7 se trouve agrandi axialement pour correspondre à la surface bord 43 du rebord intérieur 39 du bandage 5. Ceci permet d'augmenter la résistance du flanc intérieur 31, en particulier à l'usure, relativement au flanc extérieur 33. En travail, le flanc intérieur 31 est plus exposé que le flanc extérieur 33. En outre, cette roue 1 est destinée à travailler avec un angle de travers relativement à la direction d'avance, angle qui expose le flanc intérieur 31. Cette surépaisseur peut atteindre 20 pour cent. Cette surépaisseur du flanc intérieur 31 relativement au flanc extérieur 33 augmente en outre la pression de contact sur la surface homologue 45 et améliore l'étanchéité.

Sur sa première portion 51A, la paroi latérale 51 correspondant au flanc interne 31 s'étend selon un profil arrondi, depuis la rainure circulaire 55 correspondante, qui évite les contraintes au lieu de raccordement de la première portion 51A à la seconde portion 51B. Ce profil augmente également la masse de matière qui se trouve au-dessus de la surface homologue 45 du bord intérieur 19 améliorant d'autant l'étanchéité entre cette surface 45 et la surface d'appui 43. Cette première portion 51A se raccorde au fond 53 avec un large congé.

À la différence de la surface de butée des figures 2 et 4, la surface de butée 67 s'étend ici de manière inclinée relativement à la direction axiale de l'entretoise 56. Ceci permet de compenser une inclinaison de la roue en travail. Cette surface de butée 67 est portée par une portion secondaire 69 généralement tronconique. En outre, la surface de butée 67 présente un galbe léger, lorsqu'on regarde cette surface depuis l'extérieur de l'entretoise 56. Ce galbe assure un contact harmonieux entre la surface de butée 67 et la bande 27.

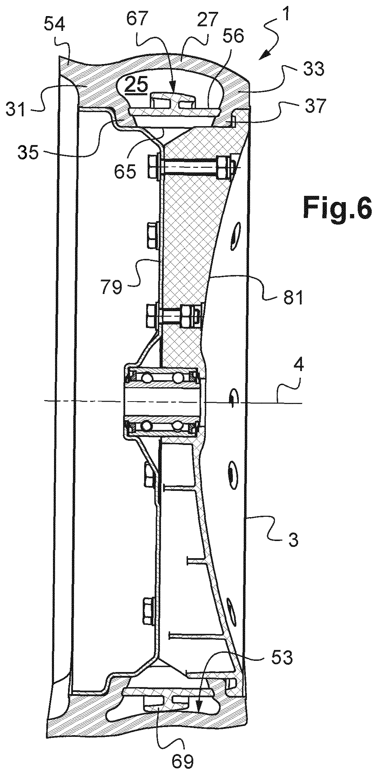

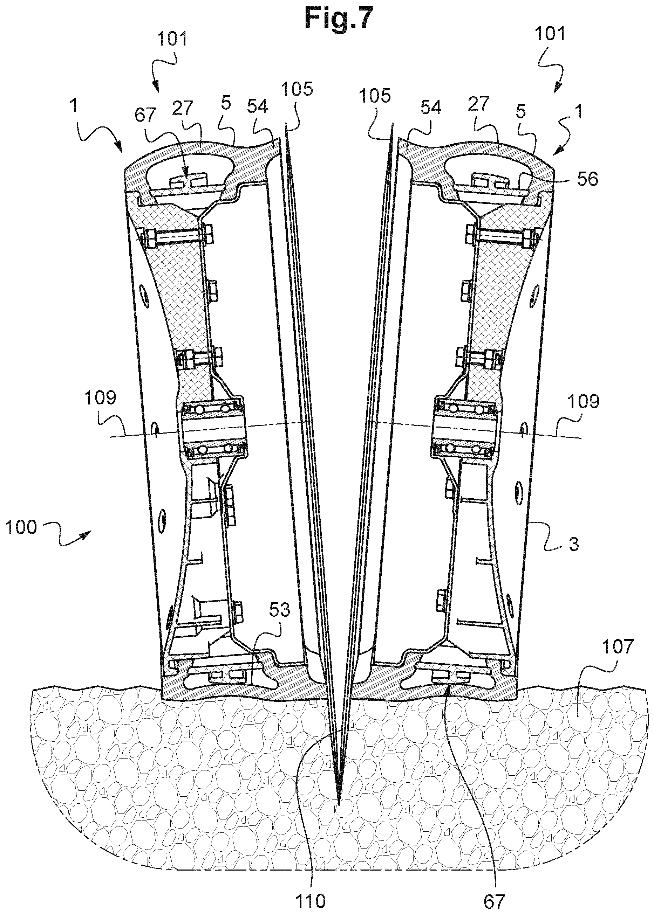

On fait référence aux figures 6 et 7.

Un ensemble de semoir 100 comprend une paire d'outils rotatifs 101 analogues, montée de manière symétrique par rapport à un plan vertical sur un support non représenté. Chaque outil 101 comprend un disque semoir 105 respectif, typiquement monté libre à rotation sur le châssis d'une machine ou d'un outil tracté/poussé par une telle machine, et une roue 1 du type de la roue décrite en relation avec les figures 5 et 6, montée de manière libre à rotation autour d'un axe 109, par exemple sur un bras (non représenté) qui relie la roue 1 au châssis en question. Le disque 105 et la roue 1 d'un outil 101 respectif sont libres de tourner l'un par rapport à l'autre.

Dans chaque outil 101, l'axe de rotation 109 de la roue 1 se trouve excentré de l'axe de rotation du disque semoir 105. Cette excentration comprend une composante verticale non nulle de sorte que l'axe de rotation du disque 105 se trouve plus bas que celui de la roue 1. L'excentration en question comprend en outre une composante horizontale non nulle de sorte que l'axe de rotation du disque 105 se trouve à l'avant de celui de la roue 1.

Les disques 105 de l'ensemble 100 sont montés de manière inclinée par rapport à un plan vertical, avec un premier pincement angulaire, et au plan de symétrie, avec un second pincement angulaire. Ces disques 105 se rapprochent l'un de l'autre selon la direction d'avance d'une part et selon une direction verticalement vers le bas, d'autre part. L'ensemble 100 présente une configuration dite en "V" relativement à la direction verticale et à la direction d'avance. Le premier angle de pincement et/ou le second angle de pincement sont par exemple voisins de 5°. Le premier angle de pincement peut différer du second.

Les roues 1 sont orientées de manière analogue aux disques 105. Les angles de pincement des roues 1, premier et second, peuvent différer de ceux des disques 105. L'inclinaison de la surface de butée 67 relativement à la partie principale de l'entretoise 56 est telle qu'elle vient compenser l'inclinaison des roues 1 relativement au plan verticale. La portion secondaire de l'entretoise 56 offre ainsi une surface de butée 67 qui s'étend à peu près horizontalement lorsque la roue 1 est montée sur un outil du type de l'outil 101. Cette configuration est particulièrement intéressante lorsque cette surface de butée 67 est destinée à recevoir un capteur de pression. Ce capteur peut mesurer une valeur d'effort vertical, ce qui facilite la lecture de l'effort par rapport à un effort de biais.

Lorsque l'ensemble 100 travaille, les disques 105 pénètrent le sol 107 de façon à y créer un sillon 110, destiné par exemple à l'enfouissement de graines ou de semences, tandis que l'ensemble 100 repose sur le sol par l'intermédiaire des roues 100, en particulier la bande de roulement 27 du bandage 5. La profondeur de travail des disques 105 est fixée grâce aux roues 1 et correspond au décalage vertical de l'axe de rotation 109 des roues 1 relativement à celui des disques 105, c'est-à-dire à la composante verticale de l'excentration de ces axes. Les disques 105 peuvent ainsi travailler le sol à une profondeur sensiblement constante, même lorsqu'un champ présente des dénivelés.

La lèvre annulaire 54, qui fait saillie du reste de l'enveloppe radialement et axialement vers l'extérieur du bandage 5 vient frotter contre la face proximale d'un disque 105 voisin en la raclant. Ce raclage a pour effet de nettoyer les disques 105 de ce qui pourrait y avoir adhéré, comme de la boue ou des débris par exemple.

La forme bombée de la surface de butée 67 de l'entretoise 56 assure un contact harmonieux de cette surface avec la bande 27, ce qui évite de détériorer cette bande.

La valeur mesurée par le capteur 71 permet de caractériser la pénétration des disques 105. Dans le cas où la valeur mesurée est nulle, ou presque, le bandage 5 ne se déforme pas, ou peu, et la bande de roulement 27 ne touche pas le sol, du moins pas assez. Cela informe d'une pénétration insuffisante des disques 105 et du risque que les graines ou les semences soient déposées à même le sol, ou à une profondeur insuffisante. Connaissant la valeur d'effort appliquée à l'outil dans son ensemble, on peut en outre déduire de l'effort mesuré par le capteur 71 l'effort résultant sur les disques 105.

Dans le cas d'une roue de rappui, où le bandage 5 est utilisé pour refermer des sillons, une faible valeur d'effort mesuré indique que le sillon est mal refermé et que la graine reste apparente.

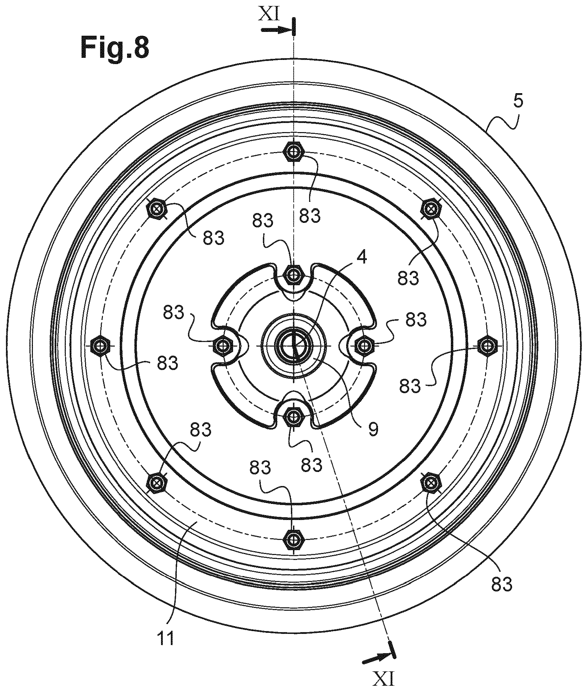

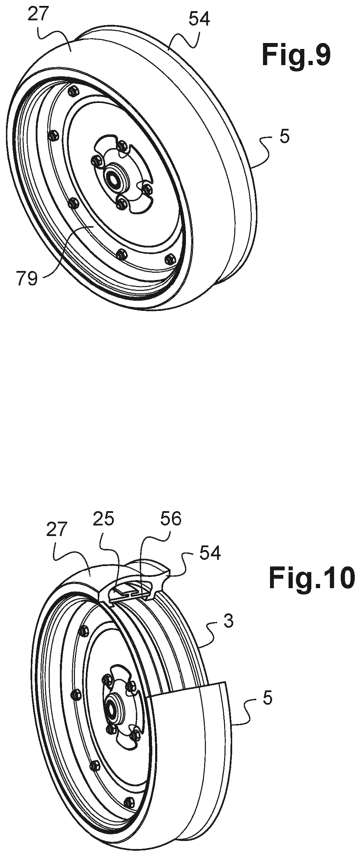

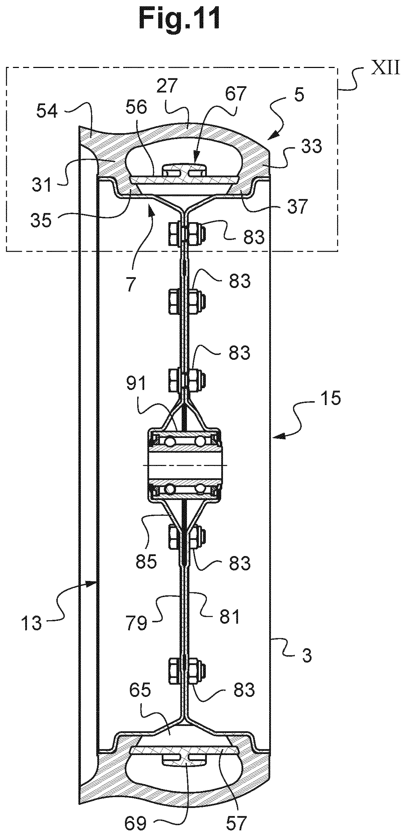

On fait référence aux figures 8 à 14.

La roue 1 qui s'y trouve représentée se distingue de la roue des figures 1 à 4 d'abord du fait que le corps 3 est constitué d'un premier flasque 79 et d'un second flasque analogues 81 l'un à l'autre.

Il en résulte que le rebord extérieur 21 de la jante 7 est conformé de manière analogue au rebord intérieur 19. Le bandage 5 présente en correspondance un rebord extérieur 41 conformé comme son rebord intérieur 39 et un talon extérieur 37 analogue au talon intérieur 35. En particulier, la surface extérieure 47 du talon extérieur 37 est tronconique et s'évase radialement vers l'extérieur comme la surface extérieure 47 du talon intérieur 35. L'inclinaison des portions tronconiques des paroi latérales 51 du bandage 5 est sensiblement plus grande que dans la réalisation des figures 1 à 4, par exemple avec un demi angle au sommet voisin de 30 degrés. Le talon intérieur 35 et le talon extérieur 37 occupent ainsi une plus grande partie des surfaces de sièges 18 de la jante 7, améliorant ainsi la tenue du bandage 5 sur le corps 3. Un plus grand volume de matière se trouve également coincé entre l'entretoise 56 et les sièges 18, ce qui améliore encore le verrouillage du bandage 5 sur le corps 3.

La surface de butée 67 présente ici un léger galbe.

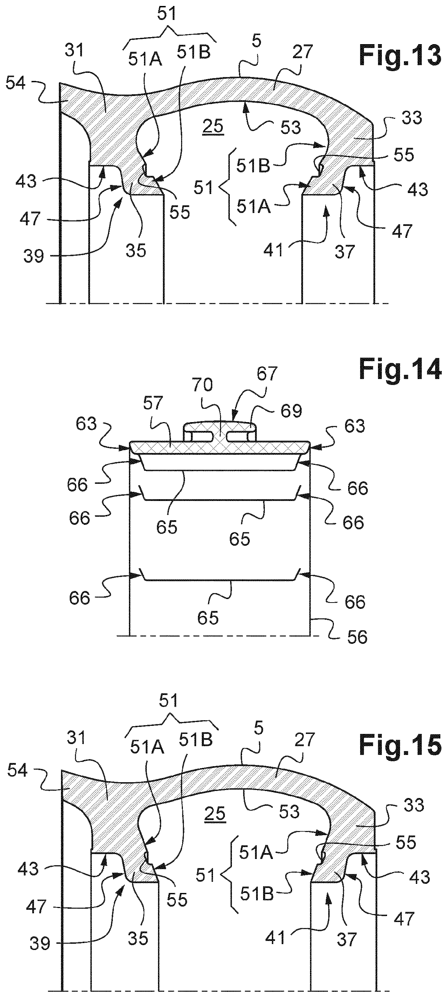

On fait référence à la figure 15.

Tout en conservant des talons intérieur 35 et extérieur 37 mutuellement analogues, le bandage 5 peut présenter des paroi latérales 51 tronconiques moins inclinée que celle de la figure 13 notamment, ici avec un demi angle au sommet voisin de 20 degrés.

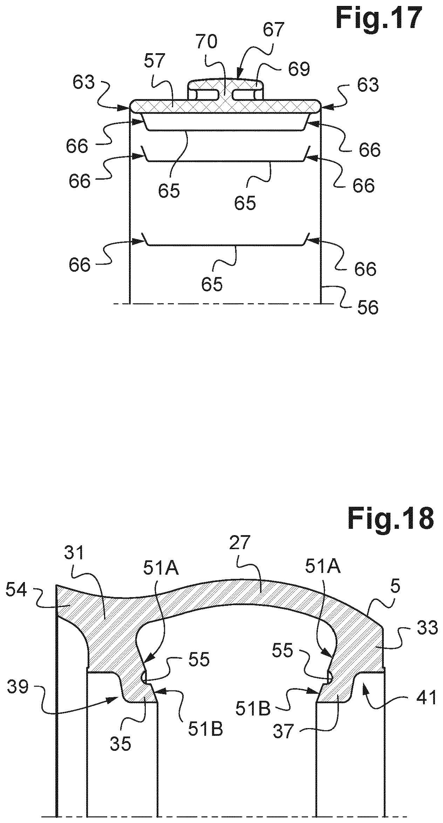

On fait référence aux figures 17 et 18.

Le profil de chaque rainure 55 correspond au profil des portions d'extrémités axiales de l'entretoise 56. Ici le profil de ces rainures présente une forme de demi-cercle et non de demi-trapèze comme sur les figures 15 et 13 notamment. La forme de ces surfaces d'extrémités axiales 63 correspond à la forme du fond des rainures circulaires 55, ici demi circulaire.

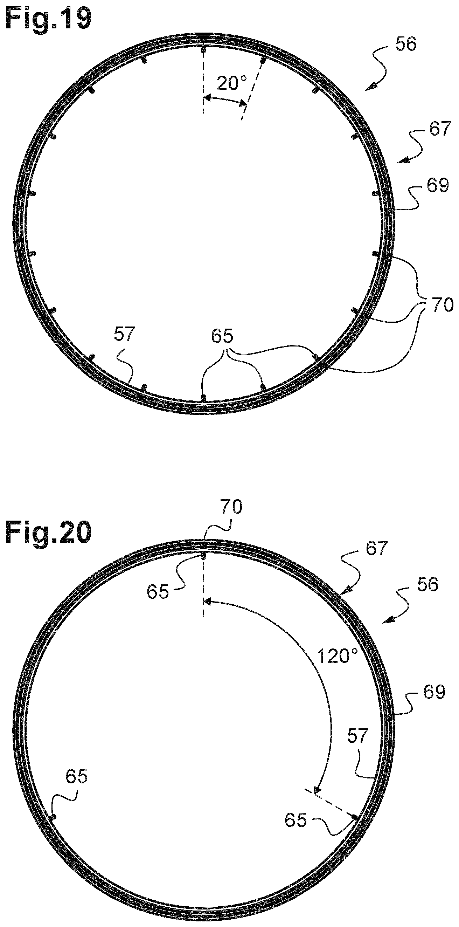

On fait référence aux figures 19 et 20.

Sans sortir du cadre de l'invention, l'entretoise 56 peut présenter de 3 à une pluralité de nervures. De préférence ces nervures sont régulièrement réparties de manière angulaire, à 120 degrés l'une de l'autre dans le cas de 3 nervures ou 20 degrés dans le cas de 18 nervures.

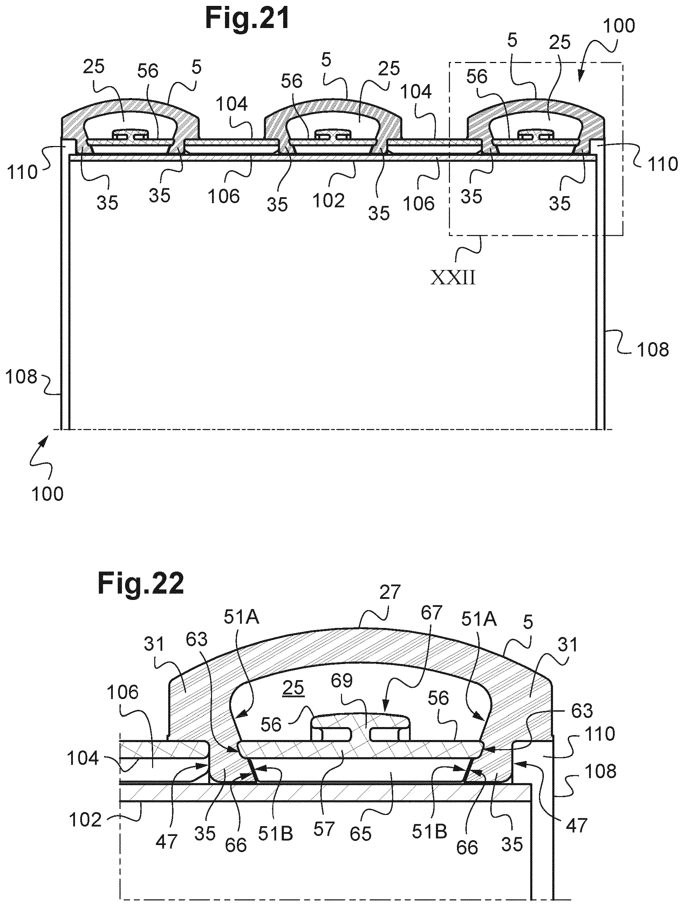

On fait référence aux figures 21 et 22.

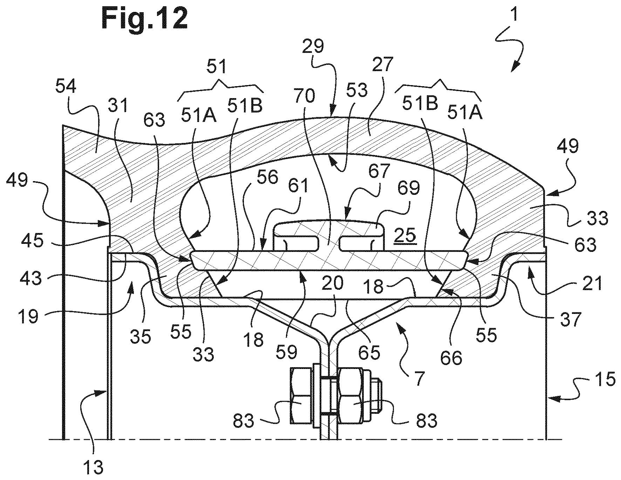

L'outil agricole prend ici la forme d'un rouleau 100 comprenant un support généralement tubulaire 102 sur lequel est montée une pluralité de bandages souple 5 du type du bandage souple décrit en relation avec les figures 12 et 13 notamment, à l'exception que ce bandage 5 est dépourvu de lèvre du type de la lèvre 54 et que les surfaces extérieures 47 des talons 35 sont droites (s'étendent dans un plan perpendiculaire à l'axe central du bandage 5). L'entretoise 56 est analogue à l'entretoise décrite en relation avec la figure 13 notamment.

Cette entretoise 56 engage, par ses portions d'extrémités axiales, les parois latérales 51 de la chambre 25, au niveau des seconds tronçons 51B.

Le rouleau 100 comprend en outre une pluralité d'entretoises supplémentaires 104, chaque entretoise supplémentaire 104 étant intercalée entre deux bandages souples 5 mutuellement adjacents. Chaque entretoise supplémentaire 104 présente une allure généralement tubulaire, avec un profil circulaire. Une pluralité de nervures 106 fait saillie radialement vers l'intérieure d'une face radialement interne de l'entretoise 104. Chaque nervure 106 s'étend généralement suivant une direction axiale de l'entretoise 104. Chaque entretoise supplémentaire 104 se monte sur une surface extérieure du support 102 par l'intermédiaire de ses nervures 106. Par ses extrémités axiales, chaque entretoise supplémentaire 104 vient en appui contre les talons 35 de deux bandages 5 mutuellement adjacents, sur la surface extérieure 47 de ceux-ci. Le profil des extrémités longitudinales des entretoises supplémentaires 104 correspond au profil des surfaces extérieures 47 des talons 35.

Ici, cette surface extérieure 47 est lisse, mais pourrait, en variante, présenter une rainure circulaire, de profil correspondant aux portions d'extrémités axiales de l'entretoise supplémentaire, de manière à réaliser un blocage supplémentaire par coopération de forme. Ici, les portions d'extrémités axiales des entretoises supplémentaires 104 sont dépourvues de surface en saillie ou en retrait. Ces surfaces sont planes et droites, i.e. elles s'étendent chacune dans un plan perpendiculaire à l'axe central de l'entretoise supplémentaire 104.

Les bandages 5 se montent sur le support 102 une fois les entretoises 56 placées en travers de l'ouverture du bandage 5, le cas échéant engagées dans des rainures du type des rainures circulaires 55 décrites en relation avec les figures précédentes. Les bandages 5 et les entretoises 56 sont maintenus en engagement mutuel par l'intermédiaires des entretoises supplémentaires 104 et d'une paire de flaques d'extrémités 108 montée sur le support 102. Les flasques 108 présentent un rebord 110 dont la forme correspond au rebord extérieur décrit en relation avec la figure 4 notamment.

Le serrage des flasques 110 sur le support 102 assure la compression axiale des bandages 5 au niveau de leurs talons 35, compression nécessaire pour les maintenir axialement et radialement sur le support 102, de manière analogue à ce qui a été décrit plus haut dans le cas d'un outil agricole en forme de roue.

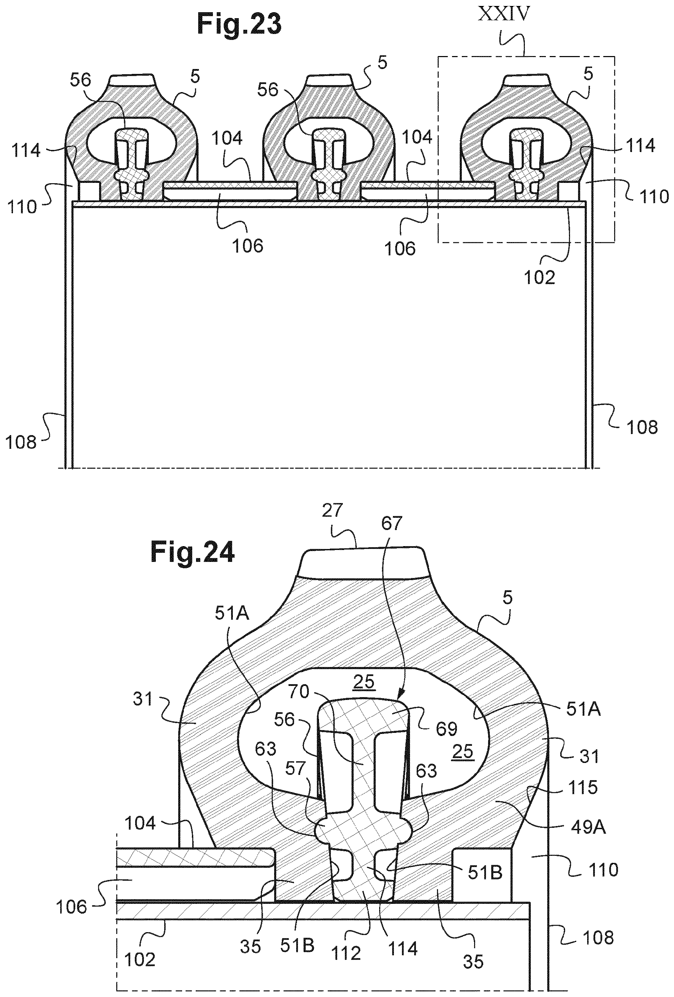

On fait référence aux figures 23 et 24.

Le rouleau 100 se distingue du rouleau de la figure 21 par la forme des bandages 5.

Chaque paroi latérale 51 de la chambre 25 présente un premier tronçon 51A au profil généralement arrondi, pratiquement demi-circulaire et un second tronçon 51B généralement tronconique s'évasant radialement vers l'extérieur du bandage 5. Chaque bandage 5 présente sur chacun de ses seconds tronçons 51B une rainure circulaire 55 respective, ici avec un profil demi-circulaire. La rainure 55 est facultative.

Les entretoises 56 présente une partie principale 57 généralement tubulaire dont les portions d'extrémités axiales sont conformées chacune d'une manière correspondant à une rainure circulaire 55 respective. Une partie des surfaces d'extrémité 63 de cette partie principale 57 s'engage dans les rainures circulaires 55, tandis que le reste de ces surfaces 63 présente un profil tronconique dont la forme correspond à celle des second tronçon 51B, au moins au voisinage du lieu d'engagement de l'entretoise 56 avec les paroi latérales 51 de la chambre 25.

L'entretoise 56 présente une partie centrale 112 tubulaire par l'intermédiaire de laquelle l'entretoise 56 se monte sur la surface extérieure du support 102. La partie centrale 112 se raccorde à la partie principale 57 par l'intermédiaire d'une nervure annulaire 114, qui peut être discontinue. Les extrémités de la partie centrale 112 sont ici conformée de manière correspondant au profil des talons 35, i.e. avec chacune une surface d'extrémité tronconique.

L'entretoise 56 présente une portion secondaire 69 qui fait saillie dans la chambre 25, au niveau des premiers tronçons 51A de la paroi latérale 51. Cette portion secondaire 69 offre une surface de butée 67 pour la bande de roulement 27 du bandage 5.

Par différence aux flasques de la figure 21, les flasques 108 présentent ici un rebord 110 qui comprend en outre un bord tronconique 115 qui offre une surface de siège à un tronçon radial 49A de forme correspondante de la surface extérieure 49 d'un flanc 31.

Pour le bandage 5, on préfère utiliser un matériau assez souple, de l'ordre de 50 Shore A afin de le rendre très déformable et éviter un encrassement de la zone entre les bandages 5.

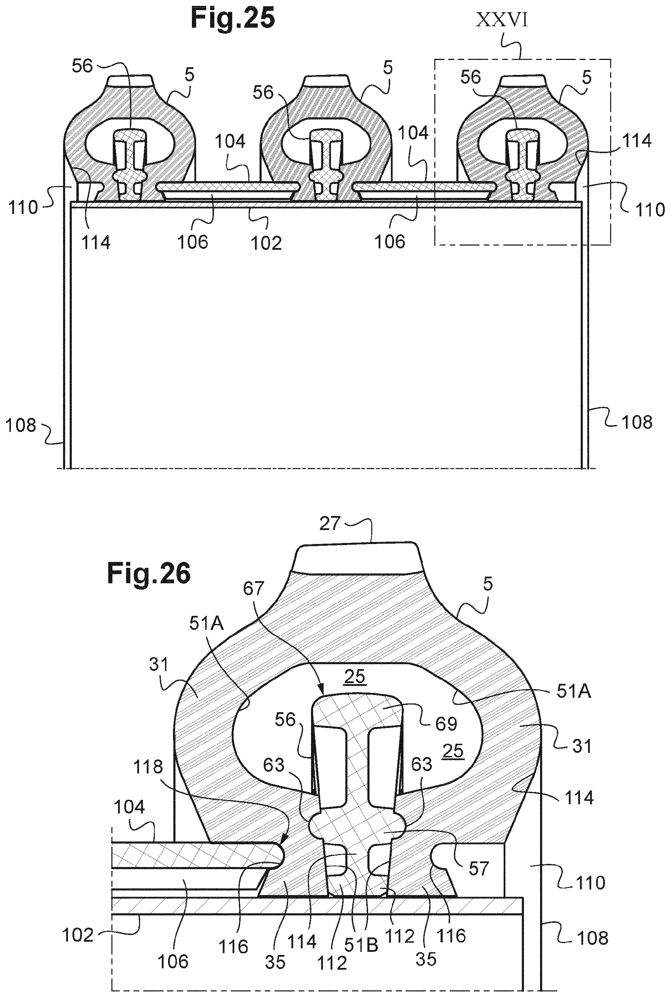

On fait référence aux figures 25 et 26.

Le rouleau 100 se distingue du rouleau de la figure 22 en ce que la surface extérieure 47 des talons 35, 37 est tronconique et s'évase radialement vers l'intérieur du bandage 5.

Sur ces surfaces extérieures 47 est à chaque fois ménagée une rainure circulaire 116 dont le profil correspond au profil des portions d'extrémités axiales des entretoise supplémentaires 106. Par ces extrémités, les entretoises 106 engagent les talons 35 par coopération de forme avec les rainures circulaires 116.

Ici, les portions d'extrémités axiales des entretoises 106 présentent une surface d'extrémité 118 saillante axialement. Ces surfaces d'extrémité 118 présentent ici un profil demi-circulaire, mais peuvent, en variante, être tronconiques, par analogie avec l'entretoise de la figure 14 par exemple. Les portions d'extrémités axiales des entretoises 106 coopèrent avec les surfaces extérieures 47 des talons 35 de manière analogue à ce qui a été décrit pour les entretoises 56 disposées en travers de l'ouverture des bandages 5.

Les rebords 110 des flasques 108 se trouvent conformés d'une manière correspondant à la surface extérieure 47 des talons 35,37.

On vient de décrire un kit destiné à former un outil agricole à partir d'un corps de roue ou d'un support tubulaire, le kit comprenant un bandage souple présentant une chambre creuse et une surface interne autour de cette chambre creuse. Le bandage souple présente en outre une ouverture circulaire sur la chambre creuse et une paire de talons qui borde cette ouverture circulaire et par l'intermédiaire de laquelle le bandage souple se monte autour du corps de roue ou du support tubulaire. Le kit comprenant en outre une entretoise avec au moins une partie généralement tubulaire. L'un au moins des talons présente une rainure circulaire ouverte sur la chambre creuse tandis que la surface interne s'étend de manière généralement tronconique, en s'évasant radialement vers l'extérieur du bandage souple, sur une partie au moins de ce talon qui court depuis la rainure circulaire radialement vers l'intérieur du bandage souple. L'entretoise est conformée de manière à se placer en travers de l'ouverture du bandage souple de manière qu'une portion d'extrémité axiale de la partie généralement tubulaire de l'entretoise s'engage dans la rainure circulaire.

L'un au moins des talons 35, 37 présente une rainure circulaire 55 ouverte sur la chambre creuse 25 tandis que la surface interne 51 s'étend de manière généralement tronconique, en s'évasant radialement vers l'extérieur du bandage souple 5, sur une partie au moins de ce talon 35, 37 qui court depuis la rainure circulaire 55 radialement vers l'intérieur du bandage souple 5, tandis que la portion d'extrémité axiale de cette entretoise 56 s'engage dans la rainure circulaire 55.

Chaque talon 35, 37 présente une rainure circulaire respective 55 ouverte sur la chambre creuse 25, tandis que la surface interne 51 s'étend de manière généralement tronconique s'évasant radialement vers l'extérieur du bandage souple 5 sur une partie au moins de chacun de ces talons 35, 37 qui court depuis la rainure circulaire (55) radialement vers l'intérieur du bandage souple 5, et l'entretoise 56 peut être conformée de manière à se placer en travers de l'ouverture du bandage souple 5 de manière que des extrémité axiales de cette entretoise 56 s'engagent chacune dans une rainure circulaire 51 respective.

La surface interne 51 peut s'étendre de manière généralement tronconique en s'évasant radialement vers l'extérieur du bandage souple 5 sur une portion qui court depuis la rainure circulaire 55 radialement vers l'extérieur du bandage souple 5.

L'une au moins des rainures circulaires peut présenter un profil de forme correspondant à un profil de l'une au moins des portions d'extrémité axiale de l'entretoise 56.

L'une au moins des rainures circulaires peut présenter un fond généralement tronconique qui s'évase radialement vers l'extérieur du bandage souple 5.

Une inclinaison du fond généralement tronconique relativement à une direction radiale peut être voisine d'une inclinaison de la surface interne relativement à cette direction radiale, au voisinage au moins de la rainure circulaire 55.

Une inclinaison de l'une au moins des extrémités axiales 63 de l'entretoise 56 peut être voisine de l'inclinaison de la surface interne 51 au voisinage au moins de la rainure circulaire 55.

Les rainures circulaires peuvent apparaître optionnelles. Lorsque les portions d'extrémités axiales de la partie tubulaire de l'entretoise présentent au moins une surface dont le profil est saillant axialement, l'engagement de l'entretoise dans les talons 35,37 peut résulter d'une déformation locale de la paroi latérale 51 de la chambre, au niveau des talons 35,37 qui fait apparaître une pénétration des extrémités de l'entretoise dans ces talons 35,37.

Dans un tel cas, et dans le cas de la figure 4 par exemple, on pourrait obtenir la même situation de l'entretoise 56 et du bandage 5, sans que ce dernier soit pourvu des rainures circulaires 55.

Les rainures circulaires 55 sont de faible profondeur, de l'ordre de quelques millimètres, par exemple un ou deux millimètres, et relativement étroites, en sorte que ces rainures peuvent être vues comme des encoches.

L'invention ne se limite pas aux exemples d'outils décrits ci-avant, seulement à titre d'exemple, mais elle englobe toutes les variantes que pourra envisager l'homme de l'art dans le cadre des revendications ci-après.

Le flanc extérieur 33 et le flanc intérieur 31 s'étendent généralement selon la direction radiale du bandage 9. En variante, l'un au moins du flanc extérieur 3 et du flanc intérieur 31 s'étend généralement selon une direction faiblement inclinée par rapport à la direction radiale, de l'ordre quelques degrés et de 15 degrés au plus.

Cette inclinaison peut être positive, lorsque le flanc s'écarte de la direction radiale axialement vers l'extérieur du bandage 5 à mesure qu'il s'éloigne de l'axe du bandage 5, ou négative, lorsque cet écartement se fait en direction axialement vers l'intérieur du bandage 5.

L'entretoise 56 peut présenter des portions d'extrémités axiales de forme différente l'une de l'autre.

L'un des talons peut être dépourvu de rainure, l'entretoise engageant uniquement l'autre talon.

Le capteur de pression peut être disposé sur la surface interne de la bande 27, en regard de la surface de butée 67.

La surface interne 51 peut s'étendre, au moins sur la partie correspondant au talon 35 ou 37, avec un demi-angle au sommet compris entre environ 15 degrés et 45 degrés, de préférence entre 15 et 35 degrés.

On vient également de décrire une entretoise rigide portant un capteur de pression au droit de la bande de roulement. Cette disposition du capteur n'est pas limitée aux modes de réalisation de l'entretoise décrits plus haut. Elle s'applique à tout outil agricole du type comprenant un corps de roue et un bandage souple monté autour du corps de roue, le bandage souple comprenant une ouverture sur sa face intérieure, et l'outil comprenant en outre une entretoise rigide intercalée dans l'ouverture et montée sur la jante, l'entretoise présente une face radialement extérieure en regard de la bande de roulement et l'entretoise présente une surface radialement extérieure formant butée pour le bandage souple, l'outil comprenant en outre un capteur de pression, le capteur étant fixé sur la surface de butée en regard du sommet de la bande de roulement ou sur la bande de roulement en regard de la surface de butée.

Cette surface de butée peut être inclinée par rapport à la direction axiale de l'entretoise. Cette surface de butée peut être bombée radialement vers l'extérieur de l'entretoise. Cette surface peut être généralement tronconique et s'évaser radialement dans une direction axialement vers l'extérieur.

On a aussi décrit un outil agricole 1, 100 comprenant un corps de roue 3 ou un support de rouleau 102, un bandage souple 5 présentant une chambre creuse 25 et une surface interne 51 autour de cette chambre creuse 25, le bandage souple 5 présentant en outre une ouverture circulaire sur la chambre creuse 25 et une paire de talons 35, 37 bordant cette ouverture circulaire et par l'intermédiaire de laquelle le bandage souple 5 est monté autour du corps de roue 3 ou du support de rouleau 102, l'outil comprenant en outre une entretoise 56 au moins partiellement tubulaire avec deux faces d'extrémités axialement opposées, caractérisé en ce qu'au moins sur une partie correspondant à l'un au moins des talons 35, 37, la surface interne 51 s'étend de manière généralement tronconique, en s'évasant radialement vers l'extérieur du bandage souple 5, et l'une au moins des faces d'extrémité de l'entretoise présente au moins une surface saillante axialement, l'entretoise 56 étant placée en travers de l'ouverture du bandage souple 5 de manière telle que la surface saillante 63 engage la surface interne 51 dans une zone de ladite partie correspondant au talon 35,37.

Le bandage 5 peut être contraint axialement au niveau des talons 35,37. Cette contrainte axiale peut résulter, en partie au moins, d'une déformation axiale du bandage 5, au niveau des talons 35, 37 de l'ordre de 1 à 5 pour cent.

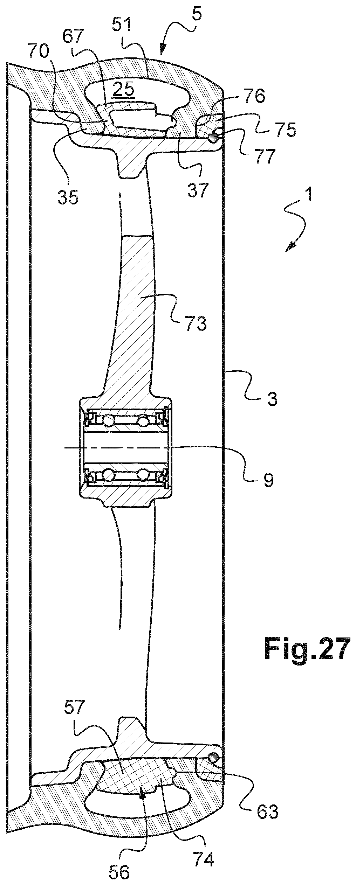

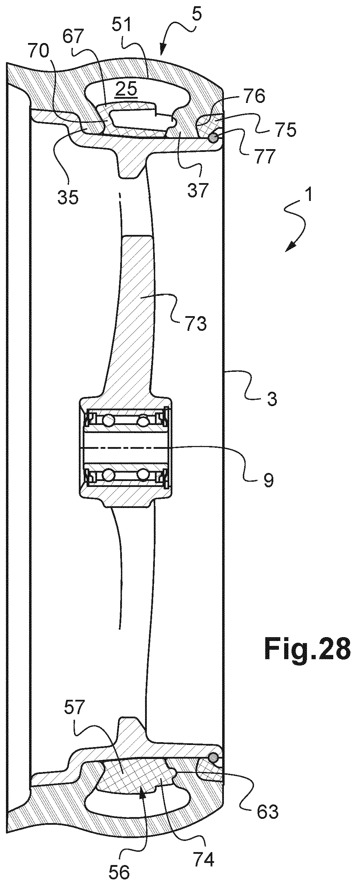

On fait référence aux figures 27 et 28.

Une variante de la roue 1 décrite en relation avec les figures 1 à 4 s'en distingue notamment en ce que le bandage 5 et l'entretoise 56 sont montés sur un corps de roue 3 comprenant une portion principale monobloc comprenant le moyeu 9 et dont le voile est constitué de bâtons 73 reliant chacun le moyeu 9 à la jante.

Le corps 3 de la roue 1 comprend une bride circulaire 75 conformée en un rebord extérieur analogue au second rebord 21 des figures précédentes. La bride 75 se monte sur le corps de roue 3 de manière à y maintenir le bandage 5 et l'entretoise 56. La roue 1 comprend encore un jonc de fermeture 77 élastique, reçu dans une rainure (non référencée) du corps de roue 3. Le jonc 77 maintient la bride 75 sur le corps de roue 3. La bride circulaire 75 est positionnée contre le talon extérieur 37 du bandage 5 et présente une surface axialement intérieure 76 en coopération de forme avec le rebord extérieur de ce talon extérieur 37. Le jonc élastique 77 est positionné contre la bride circulaire 75.

La surface axialement intérieure 76 de la bride circulaire 75 peut présenter un profil droit, comme sur la figure 27, ou un profil tronconique centré sur l'axe du moyeu 9 et s'évasant radialement vers l'intérieur comme sur la figure 28. Dans ce cas, la bride circulaire 75 agit à la manière d'un coin, qui bloque le rebord extérieur du talon extérieur 37 radialement vers l'extérieur.

Le bandage 5 présente une rainure circulaire sur la surface intérieure du talon extérieur 37. Sur sa portion radialement inférieure à la rainure circulaire, le talon extérieur 37 présente une surface interne tronconique.

L'entretoise 56 présente une surface d'extrémité axiale dirigée vers le talon intérieur 35 qui est conformée en une nervure périphérique 70. La nervure périphérique 70 est de profil généralement tronconique, centré sur l'axe du moyeu 9 et s'évasant dans une direction radial vers l'intérieur. La nervure 70 se trouve en coopération de forme avec la surface interne du talon intérieur 35, au moins sur une portion de celle-ci en contact avec la nervure 70. La nervure périphérique 70 supporte une surface de butée 67 de profil généralement cylindrique, qui fait saillie radialement dans la chambre 25.

L'entretoise 56 présente en outre une pluralité de nervures 74. Les nervures 74 sont régulièrement réparties de manière angulaire sur la circonférence de la face externe de l'entretoise 56. Chaque nervure 74 présente une surface 63 qui fait saillie de la face d'extrémité axiale de l'entretoise 56 dirigée vers le talon extérieur 37 et engager la surface interne du talon extérieur 37, ici dans sa rainure circulaire.

Le corps de roue 3 peut être est réalisé en fonte à graphite sphéroïdal ou en aluminium par exemple. La bride circulaire 75 peut être réalisée en matière plastique. Le jonc élastique 77 peut être réalisé en acier.

L'assemblage de la roue 1 se fait d'abord par légère compression du bandage 5, de l'entretoise 56 et de la bride circulaire 75 sur le corps de roue, puis en positionnant du jonc élastique 77 contre la bride circulaire 75.

Cette variante ne nécessite pas de vis pour le montage. Cela permet de simplifier et d'accélérer l'assemblage. Cela réduit également le nombre d'aspérités susceptibles de retenir la terre ou les végétaux lors de l'utilisation de la roue 1.

Des caractéristiques optionnelles sont énoncées ci-après :
- L'entretoise comprend une portion généralement tubulaire portant les faces d'extrémités axiales et une surface de butée pour le bandage, cette surface de butée faisant saillie radialement de ladite portion tubulaire, le kit comprenant en outre un capteur de pression ou analogue, ledit capteur étant attaché à la surface de butée.
- Le bandage est contraint axialement au niveau des talons.
- L'entretoise présente une face radialement intérieure, et l'entretoise comprend une pluralité de nervures axiales qui fait saillie radialement de la face intérieure de l'entretoise et par l'intermédiaire de laquelle l'entretoise se monte autour du corps de roue ou du support de rouleau.
- Chaque nervure axiale présente une extrémité axiale conformée d'une manière correspondant à la surface interne sur une partie de celle-ci correspondant à un tronçon du talon qui se trouve radialement en deçà de ladite zone.

## Revendications

1. Kit destiné à former un outil agricole (1, 100) à partir d'un corps de roue (3) ou un support de rouleau (102), le kit comprenant un bandage souple (5) présentant une chambre creuse (25) et une surface interne (51) autour de cette chambre creuse (25), le bandage souple (5) présentant en outre une ouverture circulaire sur la chambre creuse (25) et une paire de talons (35, 37) bordant cette ouverture circulaire et par l'intermédiaire de laquelle le bandage souple (5) se monte autour du corps de roue (3) ou du support de rouleau (102), le kit comprenant en outre une entretoise (56) au moins partiellement tubulaire (57) avec deux faces d'extrémités axialement opposées, **caractérisé en ce qu'**au moins sur une partie correspondant à l'un au moins des talons (35, 37), la surface interne (51) s'étend de manière généralement tronconique, en s'évasant radialement vers l'extérieur du bandage souple (5), et l'une au moins des faces d'extrémité de l'entretoise présente au moins une surface saillante axialement, l'entretoise (56) étant conformée de manière à se placer en travers de l'ouverture du bandage souple (5) de manière que la surface saillante (63) soit apte à engager la surface interne (51) dans une zone de ladite partie correspondant à l'un au moins des talons (35,37), tandis que ce talon (35, 37) présente une rainure circulaire (55) ouverte sur la chambre creuse (25) et ladite zone comprend cette rainure circulaire (55), la rainure circulaire (55) étant conformée d'une manière correspondant à la surface saillante axialement (63) de l'entretoise (56).

2. Kit selon la revendication 1, dans lequel chaque face d'extrémité de l'entretoise (56) présentant au moins une surface saillante (63) axialement présente en outre une surface axialement en retrait (66), et cette surface axialement en retrait (66) est conformée d'une manière correspondant à la surface interne (51) sur une partie au moins du talon (35, 37) qui se trouve radialement en deçà de ladite zone.

3. Kit selon la revendication 2, dans lequel la surface axialement en retrait (66) de l'entretoise (56) est conformée d'une manière correspondant à la surface interne (51) sur une partie du talon (35, 37) qui court, depuis ladite zone, radialement vers l'intérieur du bandage souple (5), en particulier jusqu'à une extrémité radiale de talon (35,37).

4. Kit selon l'une des revendications 2 à 3, dans lequel la surface axialement en retrait (66) est généralement tronconique et s'évase radialement vers l'extérieur de l'entretoise (56).

5. Kit selon l'une des revendications précédentes, dans lequel l'entretoise (56) présente une face radialement intérieure (59), et l'entretoise (56) comprend une pluralité de nervures axiales (65) qui fait saillie radialement de la face intérieure (59) de l'entretoise (56) et par l'intermédiaire de laquelle l'entretoise (56) se monte autour du corps de roue (3) ou du support de rouleau (102), et dans lequel chaque nervure axiale (65) présente une extrémité axiale (66) conformée d'une manière correspondant à la surface interne (51) sur une partie de celle-ci correspondant à un tronçon du talon (35, 37) qui se trouve radialement en deçà de ladite zone.

6. Kit selon l'une des revendications précédentes, dans lequel la surface saillante axialement (63) est généralement tronconique ou de profil demi-circulaire.

7. Kit selon l'une des revendication précédentes, dans lequel la surface interne (51) s'étend, au moins sur la partie correspondant au talon (35, 37), avec un demi-angle au sommet compris entre environ 15 degrés et 45 degrés, de préférence entre 15 et 35 degrés.

8. Kit selon l'une des revendications précédentes, dans lequel l'entretoise (56) présente une surface radialement intérieure (59) plus longue axialement qu'une dimension axiale de l'ouverture du bandage (5).

9. Kit selon l'une des revendications précédentes, dans lequel l'entretoise (56) comprend une portion généralement tubulaire (57) portant les faces d'extrémités axiales et une surface de butée (67) pour le bandage (5), cette surface de butée (67) faisant saillie radialement de ladite portion tubulaire (57).

10. Kit selon la revendication 9, dans lequel cette surface de butée (67) s'étend généralement de manière tronconique en s'évasant selon une direction axiale.

11. Kit selon l'une des revendications précédentes, dans lequel l'un au moins des talons (35, 37) présente une surface extérieure (47) avec un profil qui s'étend généralement de manière radiale.

12. Outil agricole (1, 100) comprenant un corps de roue (3) ou un support de rouleau (102), un bandage souple (5) présentant une chambre creuse (25) et une surface interne (51) autour de cette chambre creuse (25), le bandage souple (5) présentant en outre une ouverture circulaire sur la chambre creuse (25) et une paire de talons (35, 37) bordant cette ouverture circulaire et par l'intermédiaire de laquelle le bandage souple (5) est monté autour du corps de roue (3) ou du support de rouleau (102), l'outil comprenant en outre une entretoise (56) au moins partiellement tubulaire avec deux faces d'extrémités axialement opposées, **caractérisé en ce qu'**au moins sur une partie correspondant à l'un au moins des talons (35, 37), la surface interne (51) s'étend de manière généralement tronconique, en s'évasant radialement vers l'extérieur du bandage souple (5), et l'une au moins des faces d'extrémité de l'entretoise présente au moins une surface saillante axialement, l'entretoise (56) étant placée en travers de l'ouverture du bandage souple (5) de manière telle que la surface saillante (63) engage la surface interne (51) dans une zone de ladite partie correspondant au talon (35,37), tandis que ce talon (35, 37) présente une rainure circulaire (55) ouverte sur la chambre creuse (25) et ladite zone comprend cette rainure circulaire (55), la rainure circulaire (55) étant conformée d'une manière correspondant à la surface saillante axialement (63) de l'entretoise (56).

13. Outil agricole selon la revendication 12, dans lequel le bandage (5) est contraint axialement au niveau des talons (35,37), et la contrainte axiale résulte, en partie au moins, d'une déformation axiale du bandage (5), au niveau des talons (35, 37) de l'ordre de 1 à 5 pour cent.

14. Outil selon l'une des revendications 12 et 13, dans lequel de corps de roue (3) comprend une partie principale monobloc, comprenant un moyeu et un voile reliant le moyeu à une jante, et une bride circulaire (75) qui se monte sur la partie principale, la bride étant conformée en un rebord extérieur du corps de roue (3) en coopération de forme avec un rebord du bandage (5).

## Patentansprüche

1. Satz zur Bildung eines landwirtschaftlichen Werkzeugs (1, 100) aus einem Radkörper (3) oder einem Rollenträger (102), wobei der Satz eine weiche Bandage (5) umfasst, der eine Hohlkammer (25) und eine Innenfläche (51) um diese Hohlkammer (25) aufweist, wobei die weiche Bandage (5) ferner eine kreisförmige Öffnung an der Hohlkammer (25) und ein Paar Absätze (35, 37) aufweist, das diese kreisförmige Öffnung umschließt und über das die weiche Bandage (5) um den Radkörper (3) montiert wird oder des Rollenträgers (102), wobei der Satz ferner einen mindestens teilweise röhrenförmigen Abstandshalter (56) mit zwei axial gegenüberliegenden Endseiten (57) umfasst, **dadurch gekennzeichnet, dass** sich die Innenfläche (51) mindestens an einem Teil, der mindestens einem der Absätze (35, 37) entspricht, im Allgemeinen kegelförmig erstreckt, sich radial nach außen aus der weichen Bandage (5) ausweitet, und dass mindestens eine der Endseiten des Abstandshalters mindestens eine axial hervorstehende Fläche aufweist, wobei der Abstandshalter (56) so geformt ist, dass er sich durch die Öffnung der weichen Bandage (5) positioniert, so dass die hervorstehende Fläche (63) dazu geeignet ist, die Innenfläche (51) in einen Bereich des Teils einzugreifen, der mindestens einem der Absätze (35, 37) entspricht, während dieser Absatz (35, 37) eine kreisförmige Nut (55) aufweist, die an der Hohlkammer (25) offen ist, und dieser Bereich diese kreisförmige Nut (55) umfasst, wobei die kreisförmige Nut (55) in einer Weise geformt ist, die der axial hervorstehenden Fläche (63) des Abstandshalters (56) entspricht.

2. Satz nach Anspruch 1, wobei jede Endseite des Abstandshalters (56) mit mindestens einer axial hervorstehenden Fläche (63) ferner eine axial zurückliegende Fläche (66) aufweist, und diese axial zurückliegende Fläche (66) in einer Weise ausgebildet ist, die der Innenfläche (51) an mindestens einem Teil des Absatzes (35, 37) entspricht, der sich radial unterhalb dieses Bereichs befindet.

3. Set nach Anspruch 2, wobei die axial zurückliegende Fläche (66) des Abstandshalters (56) in einer Weise ausgebildet ist, die der Innenfläche (51) an einem Teil des Absatzes (35, 37) entspricht, der von diesem Bereich radial nach innen zur weichen Bandage (5) verläuft, insbesondere bis zu einem radialen Ende des Absatzes (35, 37).

4. Satz nach einem der Ansprüche 2 bis 3, wobei die axial zurückliegende Fläche (66) im Allgemeinen konisch ist und sich radial nach außen des Abstandshalters (56) aufweitet.

5. Satz nach einem der vorhergehenden Ansprüche, wobei der Abstandshalter (56) eine radial Innenseite (59) aufweist und der Abstandshalter (56) eine Vielzahl von axialen Rippen (65) umfasst, die radial aus der Innenseite (59) des Abstandshalters (56) hervorstehen und durch die der Abstandshalter (56) um den Radkörper (3) oder den Rollenträger (102) montiert wird, und wobei jede axiale Rippe (65) ein axiales Ende (66) aufweist entsprechend der Innenfläche (51) an einem Teil davon ausgebildet, der einem Abschnitt des Absatzes (35, 37) entspricht, der sich radial unterhalb dieses Bereichs befindet.

6. Satz nach einem der vorhergehenden Ansprüche, wobei die axial hervorstehende Fläche (63) im Allgemeinen konisch oder halbrund ist.

7. Set nach einem der vorhergehenden Ansprüche, wobei sich die Innenfläche (51) mindestens auf den dem Absatz (35, 37) entsprechenden Teil mit einem oberen Halbwinkel zwischen etwa 15 Grad und 45 Grad, vorzugsweise zwischen 15 und 35 Grad, erstreckt.

8. Satz nach einem der vorhergehenden Ansprüche, wobei der Abstandshalter (56) eine radiale Innenfläche (59) aufweist, die axial länger ist als ein axiales Maß der Öffnung der Bandage (5).

9. Satz nach einem der vorhergehenden Ansprüche, wobei der Abstandshalter (56) einen im Allgemeinen röhrenförmigen Abschnitt (57) umfasst, der die axialen Endflächen und eine Anschlagfläche (67) für die Bandage (5) trägt, wobei diese Anschlagfläche (67) radial aus dem röhrenförmigen Abschnitt (57) hervorsteht.

10. Satz nach Anspruch 9, wobei sich diese Anschlagfläche (67) im Allgemeinen konisch ausdehnt, indem sie sich in einer axialen Richtung aufweitet.

11. Set nach einem der vorhergehenden Ansprüche, wobei mindestens einer der Absätze (35, 37) eine Außenfläche (47) mit einem Profil aufweist, das sich im Allgemeinen radial erstreckt.

12. Landwirtschaftliches Werkzeug (1, 100) umfassend einen Radkörper (3) oder einen Rollenträger (102), eine weiche Bandage (5), die eine Hohlkammer (25) und eine Innenfläche (51) um diese Hohlkammer (25) aufweist, wobei die weiche Bandage (5) ferner eine kreisförmige Öffnung an der Hohlkammer (25) und ein Paar Absätze (35, 37) aufweist, das diese kreisförmige Öffnung umschließt und über das die weiche Bandage (5) um den Radkörper (3) oder den Rollenträger (102) montiert ist, das Werkzeug ferner einen mindestens teilweise röhrenförmigen Abstandhalter (56) mit zwei axial gegenüberliegenden Endflächen umfasst, **dadurch gekennzeichnet, dass** sich die Innenfläche (51) mindestens an einem Teil, der mindestens einem der Absätze (35, 37) entspricht, im Allgemeinen kegelförmig erstreckt, sich radial nach außen aus der weichen Bandage (5) ausweitet, und dass mindestens eine der Endflächen des Abstandhalters mindestens eine axial hervorstehende Fläche aufweist, wobei der Abstandhalter (56) durch die Öffnung der weichen Bandage (5) so platziert ist, dass die hervorstehende Fläche (63) die Innenfläche (51) in einen Bereich des dem Absatz (35, 37) entsprechenden Teils eingreift, während dieser Absatz (35, 37) eine kreisförmige Nut (55) aufweist, die an der Hohlkammer (25) offen ist und diesen Bereich diese kreisförmige Nut (55) umfasst, wobei die kreisförmige Nut (55) in einer Weise ausgebildet ist, die der axial hervorstehenden Fläche (63) des Abstandshalters (56) entspricht.

13. Landwirtschaftliches Werkzeug nach Anspruch 12, wobei die Bandage (5) an den Absätzen (35,37) axial gespannt ist, und die axiale Belastung zumindest teilweise aus einer axialen Verformung der Bandage (5) an den Absätzen (35, 37) im Bereich von 1 bis 5 Prozent resultiert.

14. Werkzeug nach einem der Ansprüche 12 und 13, wobei der Radkörper (3) einen einteiligen Hauptteil umfasst, der eine Nabe und eine Scheibe umfasst, die die Nabe mit einer Felge verbindet, und einen kreisförmigen Flansch (75), der auf dem Hauptteil montiert wird, wobei der Flansch in einem äußeren Rand des Radkörpers (3) in Formkooperation mit einem Rand der Bandage (5) ausgebildet ist.

## Claims

1. A kit for forming an agricultural tool (1, 100) from a wheel body (3) or a roller support (102), the kit comprising a flexible track (5) having a hollow chamber (25) and an inner surface (51) around this hollow chamber (25), the flexible track (5) further having a circular opening on the hollow chamber (25) and a pair of beads (35, 37) bordering this circular opening and through which the flexible track (5) is mounted around the wheel body (3) or the roller support (102), the kit further comprising a spacer (56) at least partially tubular (57) with two axially opposite end faces, **characterised in that** at least on a part corresponding to at least one of the beads (35, 37), the inner surface (51) extends generally frusto-conically, flaring radially outwardly of the flexible track (5), and at least one of the end faces of the spacer has at least one axially protruding surface, the spacer (56) being shaped so as to be positioned through the opening of the flexible track (5) such that the protruding surface (63) is capable of engaging the inner surface (51) in a zone of said part corresponding to at least one of the beads (35, 37), while said bead (35, 37) has a circular groove (55) open onto the hollow chamber (25) and said zone comprises this circular groove (55), the circular groove (55) being shaped in a manner corresponding to the axially protruding surface (63) of the spacer (56).

2. The kit according to claim 1, wherein each end face of the spacer (56) having at least one axially protruding surface (63) further has an axially recessed surface (66), and this axially recessed surface (66) is shaped in a manner corresponding to the inner surface (51) over at least one part of the bead (35, 37) that is radially located below said zone.

3. The kit according to claim 2, wherein the axially recessed surface (66) of the spacer (56) is shaped in a manner corresponding to the inner surface (51) on a portion of the bead (35, 37) running, from said zone, radially inwardly of the flexible track (5), in particular to a radial end of the bead (35, 37).

4. The kit according to one of claims 2 to 3, wherein the axially recessed surface (66) is generally frusto-conical and flares radially outwardly of the spacer (56).

5. The kit according to one of the preceding claims, wherein the spacer (56) has a radially internal face (59), and the spacer (56) comprises a plurality of axial ribs (65) that radially projects from the internal face (59) of the spacer (56) and through which the spacer (56) is mounted around the wheel body (3) or the roller support (102), and wherein each axial rib (65) has an axial end (66) shaped in a manner corresponding to the inner surface (51) over a part thereof corresponding to a section of the bead (35, 37) which is located radially below said zone.

6. The kit according to one of the preceding claims, wherein the axially protruding surface (63) is generally frusto-conical or semi-circular in profile.

7. The kit according to one of the preceding claims, wherein the inner surface (51) extends, at least over the part corresponding to the bead (35, 37), with a half cone angle of between about 15 degrees and 45 degrees, preferably between 15 and 35 degrees.

8. The kit according to one of the preceding claims, wherein the spacer (56) has a radially internal surface (59) that is axially longer than an axial dimension of the opening of the track (5).

9. The kit according to one of the preceding claims, wherein the spacer (56) comprises a generally tubular portion (57) bearing the axial end faces and a stop surface (67) for the track (5), this stop surface (67) radially projecting from said tubular portion (57).

10. The kit according to claim 9, wherein this stop surface (67) extends generally frusto-conically by flaring along an axial direction.

11. The kit according to one of the preceding claims, wherein at least one of the beads (35, 37) has an external surface (47) with a profile that generally extends radially.

12. An agricultural tool (1, 100) comprising a wheel body (3) or a roller support (102), a flexible track (5) having a hollow chamber (25) and an inner surface (51) around this hollow chamber (25), the flexible track (5) further having a circular opening on the hollow chamber (25) and a pair of beads (35, 37) bordering this circular opening and through which the flexible track (5) is mounted around the wheel body (3) or the roller support (102), the tool further comprising an at least partially tubular spacer (56) with two axially opposite end faces, **characterised in that** at least on a part corresponding to at least one of the beads (35, 37), the inner surface (51) extends generally frusto-conically, by flaring radially outwardly of the flexible track (5), and at least one of the end faces of the spacer has at least one axially protruding surface, the spacer (56) being placed across the opening of the flexible track (5) such that the protruding surface (63) engages the inner surface (51) in a zone of said part corresponding to the bead (35, 37), while said bead (35, 37) has a circular groove (55) open onto the hollow chamber (25) and said zone comprises this circular groove (55), the circular groove (55) being shaped in a manner corresponding to the axially protruding surface (63) of the spacer (56).

13. The agricultural tool according to claim 12, wherein the track (5) is axially stressed at the beads (35, 37), and the axial stress at least partly results from an axial deformation of the track (5), at the beads (35, 37) in the order of 1 to 5 percent.

14. The tool according to one of claims 12 and 13, wherein the wheel body (3) comprises a one-piece main part, comprising a wheel hub and a wheel dish connecting the wheel hub to a wheel rim, and a circular flange (75) which is mounted to the main part, the flange being shaped as an external edge of the wheel body (3) in shape cooperation with an edge of the track (5).
